# EUROPEAN PATENT APPLICATION

(11) **EP 4 700 693 A1**
(43) Date of publication of application: **25.02.2026**
(21) Application number: 25196680.0
(22) Date of filing: 19.08.2025
(51) Int. Cl.: G06Q 50/16, G06Q 50/163

(54) **INFORMATION PROCESSING SYSTEM, METHOD FOR PROCESSING INFORMATION, AND CARRIER MEDIUM**

(30) Priority: 23.08.2024 JP 2024141926; 10.12.2024 JP 2024215312
(71) Applicant: Ricoh Company, Ltd., Tokyo 143-8555 (JP)
(72) Inventor: Motohashi, Naoki, Tokyo, 143-8555 (JP); Suzuki, Yuuki, Tokyo, 143-8555 (JP)
(74) Representative: SSM Sandmair

(57) **Abstract**

An information processing system (100) includes a first server (20) that stores information related to an item, a second server (40) that stores image information of the item, and a terminal device (10). The second server (40) includes a processing unit (47) to associate the image information with the information related to the item received from the first server (20) or generated information being generated based on the information related to the item. The terminal device (10) includes a display control unit (13) to display a display screen including the image information and either at least a portion of the information related to the item or the generated information associated with the image information, which are received from the second server.

## Description

### BACKGROUND

### Technical Field

The present disclosure relates to an information processing system, a method for processing information, and a carrier medium.

### Related Art

In some cases, a first server and a second server manage pieces of information associated with each other. For example, Japanese Patent No. 6954410 discloses a technique for a communication terminal to display information managed by the first server and information managed by the second server.

Japanese Patent No. 6954410 discloses a system in which information on a real estate property transmitted from a link information management system and a spherical image of the property transmitted from an image management system are displayed on a communication terminal.

For a system including a server that manages the information on a real estate property (e.g., information on an item in a real estate property) and a terminal device, there are demands of adding the function of displaying an image managed by another server and corresponding to the information on the property. The image may be a three-dimensional (3D) models of the item. This may be achieved by configuring the server to display, on a display, the information on the property and the corresponding image (e.g., 3D models). However, adding such a function to the server will increase the cost.

### SUMMARY

The present disclosure described herein provides an information processing system that includes a first server that stores information related to an item, a second server that stores image information of the item, and a terminal device. The second server includes a processing unit to associate the image information with the information related to the item received from the first server or generated information being generated based on the information related to the item. The terminal device includes a display control unit to display a display screen including the image information and either at least a portion of the information related to the item or the generated information associated with the image information, which are received from the second server.

The present disclosure described herein provides a method for processing information performed by a server that stores image information of an item. The method includes associating the image information with information related to the item received from another server or generated information being generated based on the information related to the item, and transmitting screen information to a terminal device to allow the terminal device to display, on a display screen, the image information of the item and either at least a portion of the information related to the item or the generated information associated with the image information.

The present disclosure described herein provides a carrier medium carrying computer readable codes which, when executed by a server, cause the server to carry out the method described above.

According to one aspect of the present disclosure, the process based on the information stored by the first server and information stored by the second server can be performed without adding a processing function to the first server.

### BRIEF DESCRIPTION OF THE DRAWINGS

A more complete appreciation of embodiments of the present disclosure and many of the attendant advantages and features thereof can be readily obtained and understood from the following detailed description with reference to the accompanying drawings, wherein:
FIG. 1 is a schematic diagram illustrating a configuration of an information processing system;
FIG. 2 is a block diagram illustrating a hardware configuration applicable to an image management server, a property information management server, and a terminal device;
FIG. 3 is a block diagram illustrating functional configurations of an image management server, a property information management server, and a terminal device in an information processing system;
FIG. 4 is a conceptual diagram illustrating an image information management table;
FIG. 5 is a conceptual diagram illustrating a property management information management table;
FIGS. 6A and 6B are diagrams illustrating display screens on a terminal device in a model update process and a text information generation process, respectively;
FIGS. 7A and 7B are diagrams illustrating display screens on a terminal device in a model update process and a text information generation process, respectively;
FIG. 8 is a sequence diagram illustrating a process of generating screen information in which inspection information, three-dimensional image information, and a captured image are arranged, as the process based on the inspection information, the three-dimensional image information, and the captured image;
FIG. 9 is a diagram illustrating a property designation screen;
FIG. 10 is a diagram illustrating a property management screen;
FIG. 11 is a diagram illustrating a property display screen;
FIG. 12 is a diagram illustrating an inspection image screen;
FIG. 13 is a diagram illustrating switching of display of three-dimensional image information and inspection information of an item in a second display area of a property management screen;
FIG. 14 is a sequence diagram illustrating a process of generating screen information based on inspection information, three-dimensional image information, and a captured image of an item;
FIG. 15 is a sequence diagram illustrating a model updating process;
FIG. 16 is a diagram illustrating a property display screen on a terminal device;
FIG. 17 is a sequence diagram illustrating a process of generating text information;
FIG. 18 is a diagram illustrating a property display screen in an inference phase;
FIG. 19 is a diagram illustrating text information displayed on an inspection image screen;
FIG. 20 is a block diagram illustrating functional configurations of an image management server, a property information management server, and a terminal device in an information processing system;
FIG. 21 is a sequence diagram illustrating a process of generating text information and image information; and
FIG. 22 is a diagram illustrating a generated image displayed on an inspection image screen.

The accompanying drawings are intended to depict embodiments of the present disclosure and should not be interpreted to limit the scope thereof. The accompanying drawings are not to be considered as drawn to scale unless explicitly noted. Also, identical or similar reference numerals designate identical or similar components throughout the several views.

### DETAILED DESCRIPTION

In describing embodiments illustrated in the drawings, specific terminology is employed for the sake of clarity. However, the disclosure of this specification is not intended to be limited to the specific terminology so selected and it is to be understood that each specific element includes all technical equivalents that have a similar function, operate in a similar manner, and achieve a similar result.

Referring now to the drawings, embodiments of the present disclosure are described below. As used herein, the singular forms "a," "an," and "the" are intended to include the plural forms as well, unless the context clearly indicates otherwise.

An information processing system and an information processing method performed by the information processing system are described below with reference to the drawings.

### Supplemental Description of Tacit Knowledge

In industries such as civil engineering and construction, the implementation of building information modeling (BIM)/construction information modeling (CIM) has been promoted with the aim of addressing challenges such as a declining birthrate and aging population, as well as increasing labor productivity.

BIM refers to a solution that utilizes a database of buildings in which a three-dimensional digital model created on a computer is supplemented with attribute data, such as cost, finishes, and management information. This solution enables the effective use of information throughout a building lifecycle, including design, construction, and subsequent maintenance and management. The three-dimensional digital model may be referred to as a 3D model in the following description.

CIM is a solution that has been proposed for the field of civil engineering (widely covering infrastructure such as roads, electricity, gas, and water supply), following BIM that has been advanced in the field of construction. Similar to BIM, CIM is being promoted as an initiative to enhance and streamline a series of construction production systems by sharing information, particularly 3D models, among stakeholders.

In promoting BIM and CIM, a point is how to utilize the constructed BIM and CIM.

Specifically, the 3D models reconstructed through BIM and CIM can be utilized not only for design and construction purposes but also for other works, such as maintenance and management operations and site survey. In other words, 3D models can be used for other purposes, such as recording information in the models and sharing information with other stakeholders in addition to design drawings.

Operations performed on 3D models is recordable as logs. If tacit knowledge is extracted based on the operations, the tacit knowledge can be effectively used to transfer skills and expertise from experts to unexperienced workers. This is expected to contribute to, for example, front-loading of operations and human resource development.

Focusing on the transfer of tacit knowledge, a challenge is how to transfer tacit knowledge between different tasks or between users with different levels of skill as described above regardless of whether the data is two-dimensional (2D), such as spherical images or planar images, or 3D models.

Specifically, tacit knowledge is qualitative and difficult to quantify. Even when tacit knowledge models are generated from tacit knowledge, it is difficult to gain users' trust in tacit knowledge models and to promote the use of tacit knowledge models. For example, if the area of expertise of a tacit knowledge model differs from the area of expertise of the user, the tacit knowledge model is useless for the user no matter how excellent the tacit knowledge model is. Similarly, the tacit knowledge model is useless for the user if the knowledge level of the tacit knowledge model is lower than that of the user.

Tacit knowledge models, however, provide users with new perspectives and insights. Tacit knowledge models have potential for helping users with limited experience to obtain know-how and technical skills, and to use the obtained know-how and technical skills in work.

In addition, for a system including a first server that stores the property management information and a terminal device, there are demands of adding the function of displaying images, such as 3D models, corresponding to property management information.

This may be achieved by configuring the first server to display, on a display, property management information and images (e.g., 3D models) corresponding thereto. However, adding such a function to the first server will increase the cost.

According to one aspect of the present disclosure, the second server executes a process based on the property management information managed by the first server and the three-dimensional image information of the property managed by the second server so that the terminal device displays the three-dimensional image information and the property management information obtained from the first server on one screen in association with each other, according to an instruction input by a user. The property management information includes an image actually captured from the property, which may be referred to as a captured image in the following description. The second server can control the terminal device to display tacit knowledge (e.g., text information) about the property generated based on the captured image and the three-dimensional image information in association with the three-dimensional image information, in addition to controlling the terminal device to simply display the two pieces of information. This enables the terminal device to display the tacit knowledge about the property in association with the three-dimensional image information without a significant functional change of the first server.

### Terms

The term "user" refers to a person who uses text information or non-text content, such as images, generated or output by a tacit knowledge model. The term "data provider" refers to a person who provides data, such as audio information, text information, operation information, images, and 3D data, to be used by the tacit knowledge model for training.

The term "tacit knowledge" refers to knowledge based on, for example, personal experience and intuition. The term "tacit knowledge model" refers to a model that learns tacit knowledge and outputs an answer to a question based on the learned tacit knowledge. The term "model" refers to a mechanism or artificial intelligence (AI) that learns the correspondence between input data and output data, and outputs the output data in response to the input data. The output data may be generated through either supervised or unsupervised learning.

The term "property" refers to a space in which an item can be placed, such as a facility or a room in a facility. The term "item" refers to an object placed in a property. The type of item to be placed varies depending on the function of the facility.

Examples of such properties include, but are not limited to, real estate, industrial plants, construction sites, research institutions, medical facilities, agricultural lands, storage facilities, and other infrastructure requiring maintenance and management. Examples of such items include, but are not limited to, furniture, construction materials, equipment, heavy machinery, tools, instruments, raw materials, biological cultures, and food products.

The term "item-related information" is information related to an item and includes the name of the item and the name of the property in which the item is placed, and is preferably information that can be tacit knowledge. For example, the item-related information is information known only to a certain user. In the following description, inspection information is an example of a portion of the item-related information. The item-related information may be other type of information such as the instruction manual for the item, a daily report of work performed on the item, a quotation for the item, or the design drawing of the item. The term "inspection" may encompass various activities such as investigation, testing, verification, assessment, and checking procedures.

The term "three-dimensional image information of an item" is an image of an item displayed on a display. The three-dimensional image information of an item is a planar image obtained by projecting the three-dimensional model of an item onto a two-dimensional plane. The user is allowed to change the viewpoint. The three-dimensional image information of an item may be a spherical image.

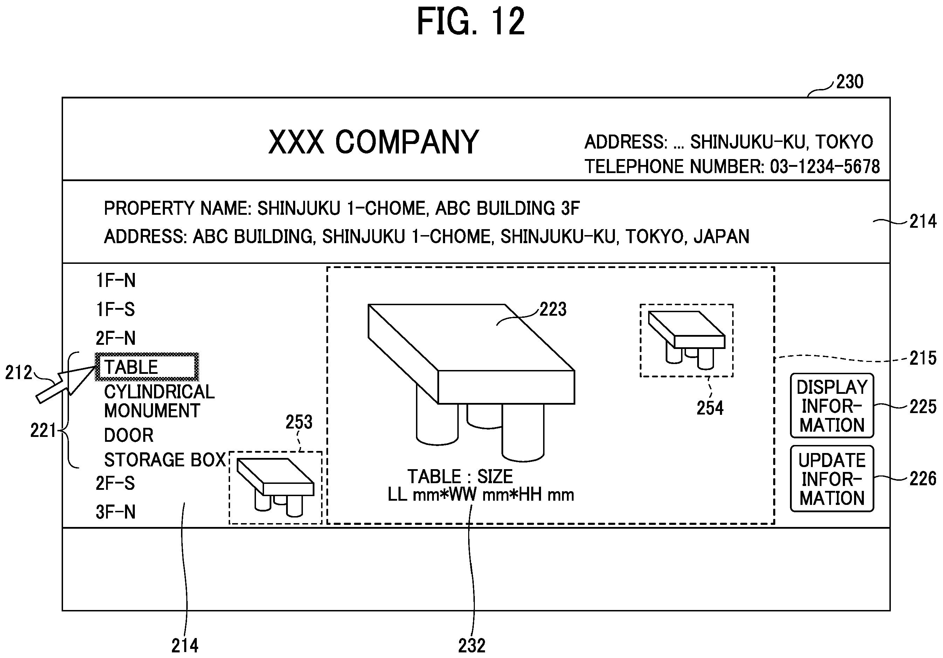

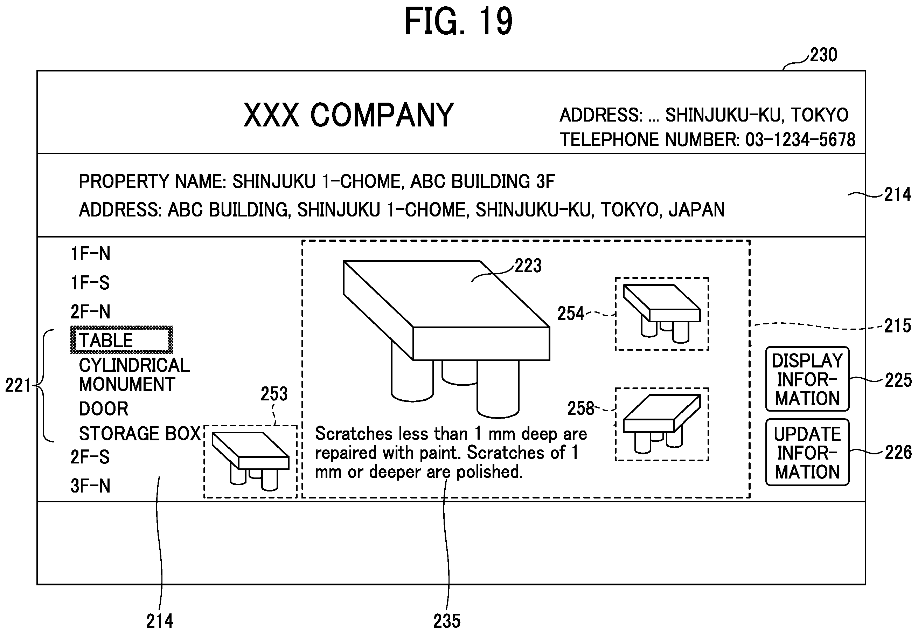

The display screen is a screen on which information, such as inspection information, a captured image, and the three-dimensional image information of an item are displayed on one screen. For example, FIGS. 12 and 19 each illustrate a display screen.

The generated information is information generated based on the three-dimensional image information and the captured image. The generated information may be generated by a tacit knowledge model. In the following description, the generated information is referred to as a tacit knowledge comment or text information.

### First Embodiment

### Example of System Configuration

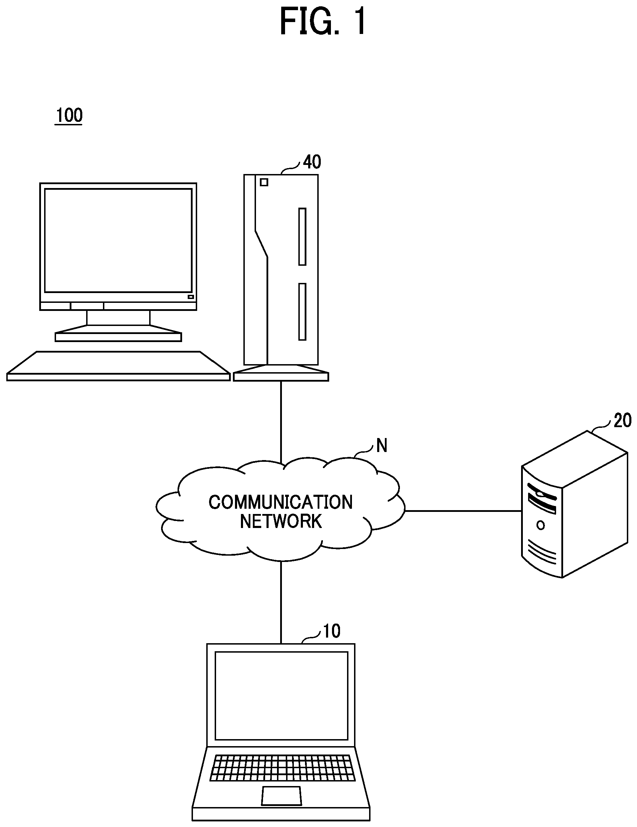

FIG. 1 is a schematic diagram of an information processing system 100. The information processing system 100 includes a terminal device 10, which is an example of an input and output device, an image management server 40, and a property information management server 20. Alternatively, the information processing system 100 may not include the terminal device 10 provided that the terminal device 10 is connected to the image management server 40 or the property information management server 20 when needed.

The image management server 40, which is an example of a second server, is one or more information processing apparatuses that communicate with the terminal device 10 via a communication network N. The image management server 40 manages three-dimensional image information of properties and includes a tacit knowledge model and a large-scale language model. The image management server 40 uses these items of information to return text information including tacit knowledge to the user. The image management server 40 may be a web server that returns a processing result to the terminal device 10 in response to a request from the terminal device 10. A server is a computer or software that provides information and a processing result in response to a request from a client.

The image management server 40 may support cloud computing. The term "cloud computing" refers to a model of computing in which resources on a network are used without being aware of specific hardware resources. Cloud computing may take any of various forms including Software as a Service (SaaS), Platform as a Service (PaaS), and Infrastructure as a Service (IaaS). For this reason, the image management server 40 does not need to be housed in a single housing or implemented by a single apparatus. The functions of the image management server 40 may be allocated among multiple information processing apparatuses. Alternatively, each of the multiple information processing apparatuses may have all the functions, and the apparatus that executes particular processing may be switched, for example, through load balancing. The image management server 40 may be a server residing in an on-premises environment.

The image management server 40 does not necessarily include the tacit knowledge model and the large-scale language model. Alternatively, the image management server 40 may call an application programming interface (API) published by an external system and use at least one of the tacit knowledge model and the large-scale language model.

The property information management server 20, which is an example of the first server, is implemented by one or more information processing apparatuses that communicate with the terminal device 10 via the communication network N. The property information management server 20 manages property management information. The property management information includes a character string such as text and an image captured at the time of inspection. The property information management server 20 is a server for a user to update property management information and manage the progress of the construction of a property and the arrangement of items.

The property information management server 20 may be a web server that returns a processing result to the terminal device 10 in response to a request from the terminal device 10. The property information management server 20 communicates with the image management server 40 via the communication network N. The property information management server 20 may support either cloud computing or on-premises environments.

Preferably, the image management server 40 and the property information management server 20 are interoperable to the extent that single sign-on is enabled. The image management server 40 communicates with the property information management server 20 via an API published by the property information management server 20. Alternatively, the image management server 40 and the property information management server 20 may be operationally linked to support business processes.

The terminal device 10 is a general-purpose information processing terminal used by a user of the information processing system 100. On the terminal device 10, a web browser and a native application dedicated to the image management server 40 or the property information management server 20 operate. In a case where the terminal device 10 executes a web browser, the terminal device 10 and one of the image management server 40 and the property information management server 20 execute the web application. Specifically, a web application functions through the cooperation of a program written in a programming language (e.g., JAVASCRIPT) and executed on a web browser and a program executed on a web server (e.g., the image management server 40). When the web application is executed, the processing may be performed by the image management server 40, the property information management server 20, or the terminal device 10 that has received the web application.

An application that is not executed unless installed on the terminal device 10 is referred to as a native application. The application executed by the terminal device 10 may be a web application or a native application. Also in this case, the entity that performs the processing may be the image management server 40 or the terminal device 10 executing the native application.

The terminal device 10 is, for example, a personal computer (PC), a smartphone, a personal digital assistant (PDA), or a tablet terminal. The terminal device 10 may be any other device on which a web browser or a native application operates. The terminal device 10 may be an electronic whiteboard, a television receiver, a smart glass device, or a wearable device. Multiple terminal devices 10 may be included or connected to the information processing system 100.

The terminal device 10 communicates with the image management server 40 and the property information management server 20 via the communication network N. The communication network N is implemented by, for example, the Internet, a local area network (LAN), or a connection service provided by a network service provider. The communication network N may include not only wired communication networks but also mobile communication networks in compliance with, for example, the third generation (3G) of wireless mobile telecommunications technology, Worldwide Interoperability for Microwave Access (WiMAX), or Long-Term Evolution (LTE), and wireless LANs. The terminal device 10 supports short-range communication technologies, such as BLUETOOTH or near field communication (NFC).

In FIG. 1, the image management server 40, the property information management server 20, and the terminal device 10 communicate with each other via the communication network N. However, the user may directly operate the image management server 40 or the property information management server 20 from the control panel.

### Hardware Configuration

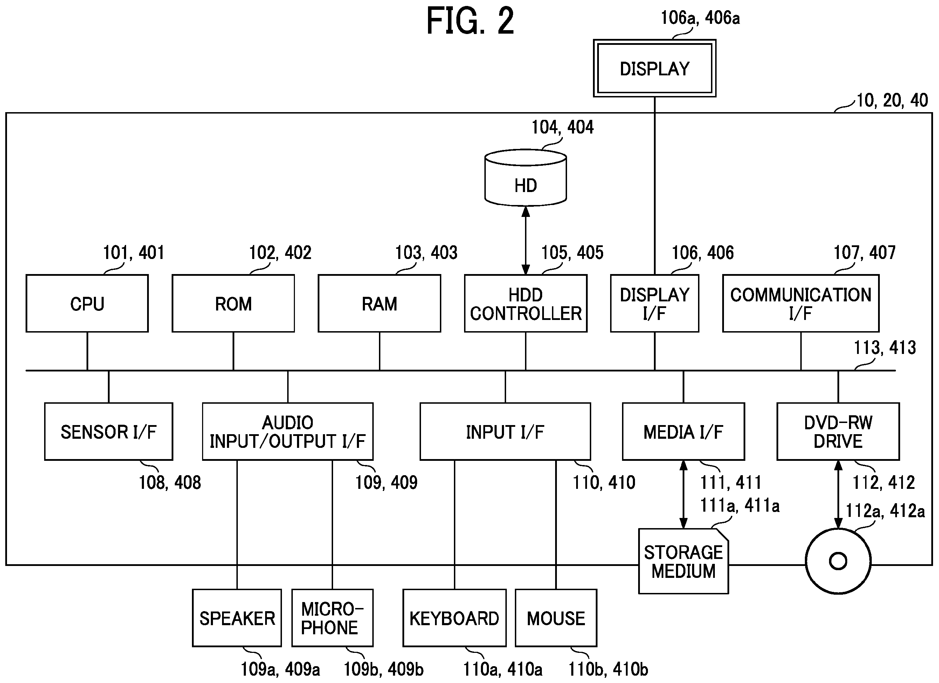

FIG. 2 is a block diagram illustrating a hardware configuration applicable to the image management server 40, the property information management server 20, and the terminal device 10. Each component of the hardware configuration applicable to the image management server 40 and the property information management server 20 is denoted by a reference numeral in the 400s. Each component of the hardware configuration applicable to the terminal device 10 is denoted by a reference numeral in the 100s.

The hardware configuration of the terminal device 10 is described below. Since the hardware configuration of the terminal device 10 is applicable to the image management server 40 and the property information management server 20, the descriptions thereof will be omitted.

The terminal device 10 is implemented by a computer. As illustrated in FIG. 2, the terminal device 10 includes a central processing unit (CPU) 101, a read-only memory (ROM) 102, a random-access memory (RAM) 103, a hard disk (HD) 104, a hard disk drive (HDD) controller 105, a display interface (I/F) 106, and a communication I/F 107.

The CPU 101 controls the overall operation of the terminal device 10. The ROM 102 stores programs such as an initial program loader (IPL) to boot the CPU 101. The RAM 103 is used as a work area for the CPU 101.

The HD 104 stores various data, such as a control program. The HDD controller 105 controls the reading or writing of various data from or to the HD 104 under the control of the CPU 101.

The display I/F 106 is a circuit to control a display 106a to display an image.

The display 106a is, for example, a liquid crystal display or an organic electroluminescence (EL) display and displays various types of information, such as a cursor, a menu, a window, characters, and an image. The communication I/F 107 is an interface used for communicating with other devices (external devices).

When the terminal device 10 is a smart glass device, the terminal device 10 may include a circuit to display images on a transmissive reflector, such as a lens, in place of the display I/F 106.

The communication I/F 107 is, for example, a network interface card (NIC) in compliance with Transmission Control Protocol/Internet Protocol (TCP/IP).

The terminal device 10 further includes a sensor I/F 108, an audio input/output I/F 109, an input I/F 110, a media I/F 111, and a digital versatile disk rewritable (DVD-RW) drive 112.

The sensor I/F 108 is an interface that receives information detected by various sensors. The audio input/output I/F 109 is a circuit that processes the input of sound signals from a microphone 109b and the output of sound signals to a speaker 109a under the control of the CPU 101. The input I/F 110 is an interface for connecting an input device to the terminal device 10.

A keyboard 110a is a type of input device that includes multiple keys for inputting, for example, characters, numerals, and various instructions. A mouse 110b is a type of input device to perform on a display screen operations, such as selecting or executing various types of instructions, selecting a subject to be processed, and moving a cursor.

The media I/F 111 controls the reading or writing (storing) of data to or from a storage medium 111a, such as a flash memory. The DVD-RW drive 112 controls the reading or writing of various data to or from a DVD-RW 112a, which is an example of a removable storage medium. The DVD-RW may be, for example, a digital versatile disc-recordable (DVD-R). The DVD-RW drive 112 may be a BLU-RAY drive to control the reading or writing of various data to or from a BLU-RAY disc.

The terminal device 10 further includes a bus line 113. Examples of the bus line 113 include an address bus and a data bus. The bus line 113 electrically connects the elements, such as the CPU 101, with one another.

The above-mentioned program may be stored in a storage medium, such as a hard disk (HD) and a compact disc-read-only memory (CD-ROM) and distributed domestically or internationally as a program product. The terminal device 10 implements an information processing method by, for example, executing a program.

### Functions

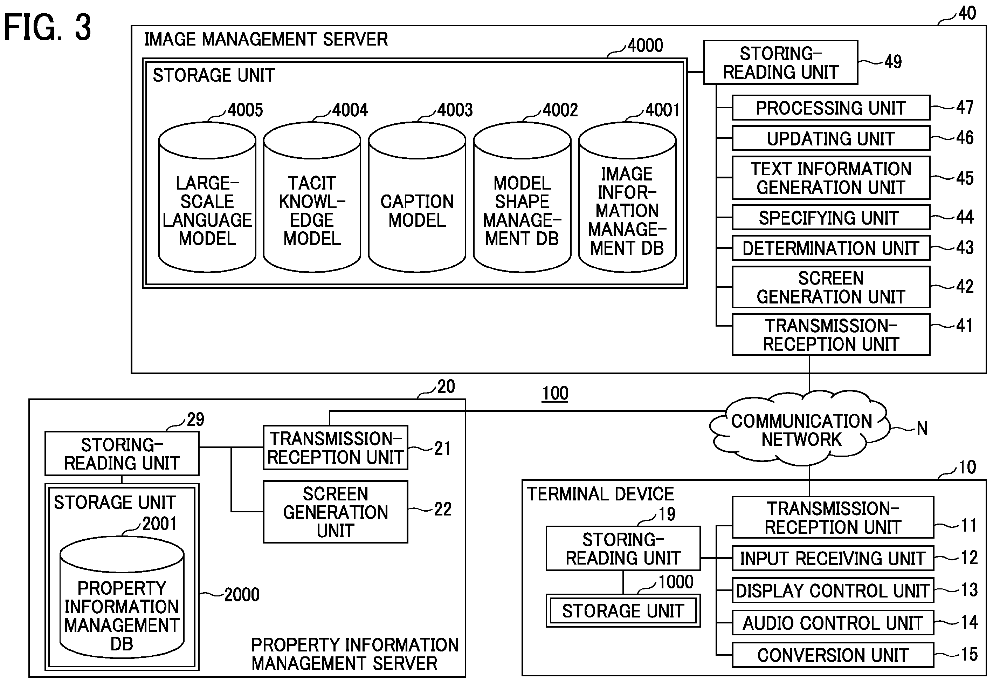

FIG. 3 is a block diagram illustrating functional configurations of the image management server 40, the property information management server 20, and the terminal device 10 in the information processing system 100.

### Communication Terminal

As illustrated in FIG. 3, the terminal device 10 includes a transmission-reception unit 11, an input receiving unit 12, a display control unit 13, an audio control unit 14, a conversion unit 15, and a storing-reading unit 19. These are units of functions implemented by or means caused to function by one or more of the elements illustrated in FIG. 2 operating in response to the instructions from the CPU 101 according to the control program loaded from the HD 104 to the RAM 103. The terminal device 10 further includes a storage unit 1000, which is implemented by at least one of the RAM 103 and the HD 104 illustrated in FIG. 2.

The transmission-reception unit 11 is an example of a transmission unit or a reception unit and implemented by instructions from the CPU 101 illustrated in FIG. 2, as well as the communication I/F 107 illustrated in FIG. 2. The transmission-reception unit 11 transmits and receives various data (or information) to and from another terminal, device, apparatus, or system via the communication network N.

The input receiving unit 12 is implemented by, for example, instructions from the CPU 101 illustrated in FIG. 2 as well as the input I/F 110 and the audio input/output I/F 109 illustrated in FIG. 2. The input receiving unit 12 receives various types of input from the user via the microphone 109b, the keyboard 110a, or the mouse 110b illustrated in FIG. 2.

The display control unit 13 is an example of an output control unit and implemented by instructions from the CPU 101 illustrated in FIG. 2 as well as the display I/F 106 illustrated in FIG. 2. The display control unit 13 displays various images and screens on the display 106a via the display I/F 106 according to instructions from the CPU 101. When the terminal device 10 is a smart glass device, the display control unit 13 displays virtual images on a transmissive reflector, such as a lens, in place of the display 106a.

The audio control unit 14 is an example of the output control unit and is implemented by instructions from the CPU 101 illustrated in FIG. 2 as well as the audio input/output I/F 109 illustrated in FIG. 2. The audio control unit 14 outputs audio through the speaker 109a, which is an example of a sound reproduction unit.

The conversion unit 15 is an example of a processing unit and is implemented by instructions from the CPU 101 illustrated in FIG. 2. The conversion unit 15 performs processing for converting text information into audio information and processing for converting audio information into text information.

The storing-reading unit 19 is an example of a storing control unit and implemented by instructions from the CPU 101 illustrated in FIG. 2, as well as the HD 104, the media I/F 111, and the DVD-RW drive 112 illustrated in FIG. 2. The storing-reading unit 19 stores various data or retrieves various data in or from the storage unit 1000, the storage medium 111a, and the DVD-RW 112a.

### Functional Configuration of Image Management Server

The image management server 40 includes a transmission-reception unit 41, a screen generation unit 42, a determination unit 43, a specifying unit 44, a text information generation unit 45, an updating unit 46, a processing unit 47, and a storing-reading unit 49.

These are units of functions that are implemented by or means caused to function by one or more of the elements illustrated in FIG. 2 operating in response to instructions from the CPU 401 according to the program loaded from the HD 404 to the RAM 403. The image management server 40 further includes a storage unit 4000 implemented by a memory such as the HD 404 in FIG. 2. The storage unit 4000 is an example of a memory or storage means.

In FIG. 3, one image management server 40 has all the functions, but the functions of the image management server 40 may be allocated among multiple computers.

The transmission-reception unit 41 is an example of a transmission unit or a reception unit and is implemented by instructions from the CPU 401 illustrated in FIG. 2 as well as the communication I/F 407 illustrated in FIG. 2. The transmission-reception unit 41 transmits and receives various data (or information) to and from another terminal, device, apparatus, or system via the communication network N.

The screen generation unit 42 is implemented by instructions from the CPU 401 illustrated in FIG. 2 and generates various screens. When the terminal device 10 executes a web application, the screen information is generated using languages such as Hypertext Markup Language (HTML), Extensible Markup Language (XML), Cascading Style Sheets (CSS), and JAVASCRIPT. Accordingly, the screen information may be referred to as a web application. When the terminal device 10 executes a client application, the terminal device 10 retains the screen information and receives information to be displayed in the format of, for example, XML.

The determination unit 43 is implemented by instructions from the CPU 401 illustrated in FIG. 2 and performs various kinds of determination described later.

The specifying unit 44 is implemented by instructions from the CPU 401 illustrated in FIG. 2 and identifies a target image.

The text information generation unit 45 is implemented by instructions from the CPU 401 illustrated in FIG. 2 and obtains tacit knowledge comments from a tacit knowledge model or generates text information using a large-scale language model 4005.

The updating unit 46 is implemented by instructions from the CPU 401 illustrated in FIG. 2 and updates a tacit knowledge model described later.

The processing unit 47 associates, based on the inspection information or the captured image transmitted from the property information management server 20 and the three-dimensional image information of the item, the three-dimensional image information of the item with the inspection information or the generated information, which is generated based on these items of information. Further, the processing unit 47 further associates the three-dimensional image information with the captured image. The processing performed by the processing unit 47 based on the inspection information or the captured image and the three-dimensional image information includes displaying both items of information on one screen and obtaining a tacit knowledge comment from a tacit knowledge model 4004 using the inspection information or the captured image and the three-dimensional image information. The tacit knowledge comment is an example of text information. The processing unit 47 requests, for example, the screen generation unit 42 or the text information generation unit 45 to perform the processing depending on the content of the processing.

The storing-reading unit 49 is an example of the storing control unit and is implemented by instructions from the CPU 401 illustrated in FIG. 2, as well as the HD 404, a media I/F 411, and a DVD-RW drive 412 illustrated in FIG. 2. The storing-reading unit 49 stores various data in or retrieve various data from the storage unit 4000, a storage medium 411a, or a DVD-RW 412a. The storage unit 4000, the storage medium 411a, and the DVD-RW 412a are examples of the memory or storage means.

In the storage unit 4000, an image information management database (DB) 4001, a model shape management DB 4002, a caption model 4003, a tacit knowledge model 4004, and a large-scale language model 4005 are built.

The image information management DB 4001 manages (e.g., stores) three-dimensional image information of a property. The three-dimensional image information is information that visually represents an item (may be referred to as a model) placed in the property. The model shape management DB 4002 manages (e.g., stores) three-dimensional model shape information of the item placed in the property. The image management server 40 generates the three-dimensional image information of the property based on the three-dimensional model shape information. The three-dimensional model shape information is information used to render the item in three dimensions as, for example, a three-dimensional model or a three-dimensional point cloud. The three-dimensional model shape information may be in the format such as polygonal data or computer-aided design (CAD) data. The image information management DB 4001 or the model shape management DB 4002 may store a wide field image, such as a spherical image, of the property. The image information management DB 4001 stores the inspection information and the captured image transcribed from the property information management DB 2001.

The caption model 4003 is generated through the learning on combinations of images and caption comments as learning data, and causes a computer to output caption comments based on the image. Caption comments are explicit knowledge and used as expressions representing tacit knowledge. The caption comment is text data and is a comment explaining an image, among audio or text comments. A caption comment on a property or an item is associated with the identification information of the property or the item.

The tacit knowledge model 4004 is generated through the learning on, as learning data, the correspondence between three-dimensional image information and a captured image and comments (other than a caption comment) on the three-dimensional image information and the captured image. The tacit knowledge model 4004 causes a computer to output a tacit knowledge comment based on the image. The tacit knowledge model 4004 may learn the correspondence between information other than comments, and three-dimensional image information and captured images mentioned below.

### Correspondence between three-dimensional image information and a captured image, and inspection information

### Correspondence between three-dimensional image information and a captured image, and comments and inspection information

The tacit knowledge comment, mentioned above, is text data and a comment other than a caption comment among audio or text comments. In other words, the tacit knowledge comment relates to a content that is not represented in the image.

The large-scale language model 4005 is a computer language model generated through the learning on a huge amount of unlabeled text as learning data. The large-scale language model 4005 is constructed by an artificial neural network having a large number of parameters. Sufficient training through methods for learning contexts, such as next sentence prediction and masked language modeling, enables the large-scale language model 4005 to capture many of syntax and meanings of human words. In next sentence prediction, the context is understood, for example, by determining whether a first sentence and a second sentence are consecutive. In masked language modeling, the context is understood by masking a word in a sentence and predicting the masked word from the words preceding and subsequent thereto.

### Image Information Management Table

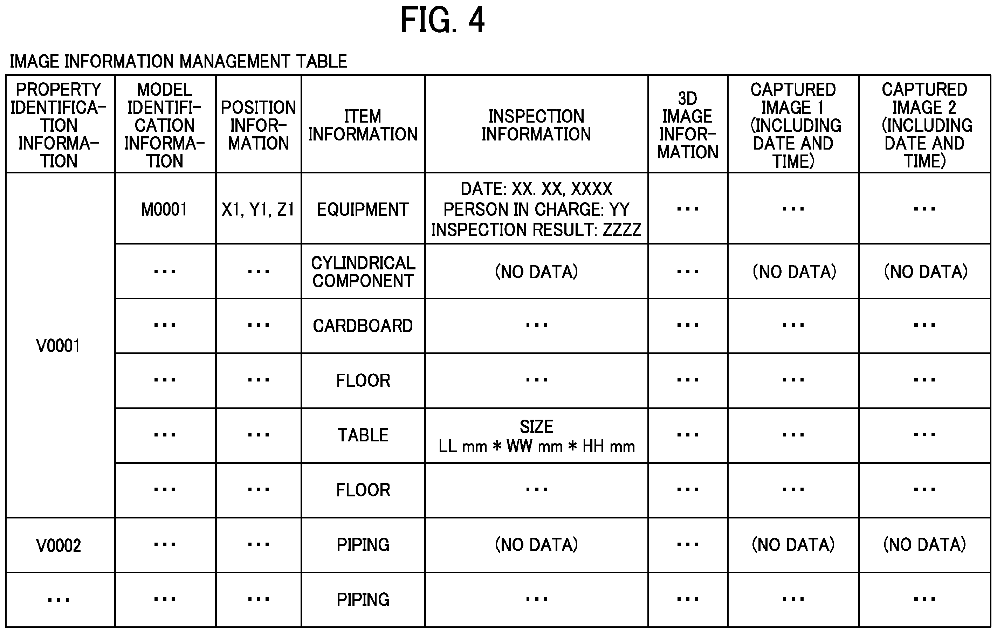

FIG. 4 is a conceptual diagram of an image information management table. The storage unit 4000 stores the image information management DB 4001 in the form of an image information management table as illustrated in FIG. 4.

In the image information management table in FIG. 4, model identification information, position information, item information, inspection information, three-dimensional image information (3D image information in FIG. 4), and one or more captured images are stored in association with property identification information. The term "property" refers to a space in which an item can be placed, such as a facility or a room in a facility. The items placed in a property vary depending on the function of the facility.

The property identification information is identification information for uniquely identifying a property.

The model identification information is identification information that identifies an item placed in a property. The property management information is associated with a three-dimensional model shape stored in the model shape management DB 4002 by the model identification information. The model identification information in the image management server 40 may be identical to the model identification information in the property information management server 20 or associated with the model identification information in the property information management server 20 by a conversion table.

The position information indicates the position, represented by XYZ three-dimensional coordinates, of an item within a property generated as a virtual space. The XYZ coordinates may represent the center of gravity of the item or a vertex of the bounding cube enclosing the item.

The item information indicates the name of an item placed in a property. In FIG. 4, the names of items are those assumed to be placed in a construction or building site. However, the names of the items vary depending on the property. Although the items are associated with the property in FIG. 4, the items may be registered irrespective of the property.

The inspection information is inspection-related information obtained when a user inspects an item in a property. The inspection information varies depending on the item and the purpose of the inspection. For example, the inspection information may indicate whether the item is abnormal, or may include the dimensions, the inspection date and time, or the inspector's name. The inspection information is obtained from the property information management server 20. The property information management server 20 stores master inspection information. The image management server 40 obtains the inspection information from the property information management server 20 and stores the obtained inspection information. This is because the inspection of items is performed for the property information management server 20. For this reason, the image information management table may include the inspection information of only limited items, or the inspection information may not necessarily be up-to-date.

The inspection information may include photographic information obtained by photographing the inspected item. In this case, the updating unit 46 analyzes the photograph information, extracts features, such as a photographed item and a state of a scratch, and converts the features into inspection information represented by character strings.

In addition to the inspection information, other information such as an instruction manual, a daily report, an estimate, and a drawing may be registered in the image information management table.

The three-dimensional image information is information visually representing an item, such as three-dimensional model shape information of the item and a spherical image. Although the three-dimensional image information is included in the image information management table in FIG. 4, the three-dimensional image information may be stored in the model shape management DB 4002.

Captured images 1 and 2 are two-dimensional images obtained from the property information management server 20 together with the inspection information. The property information management server 20 stores a master captured image. The captured images 1 and 2 are, for example, planar images of an item captured by the inspector at the time of inspection. Accordingly, when the inspection information is stored in the image information management DB 4001, the captured images 1 and 2 may also be stored therein. It is possible that the inspector captures an image of the item at each inspection, and thus multiple captured images, such as the captured images 1 and 2, may be stored. Three or more captured images may be stored. The captured images 1 and 2 have the date and time of image capturing.

### Functional Configuration of Property Information Management Server

Referring back to FIG. 3, the description is continued. The property information management server 20 includes a transmission-reception unit 21, a screen generation unit 22, and a storing-reading unit 29. These are units of functions that are implemented by or means caused to function by one or more of the elements illustrated in FIG. 2 operating in response to instructions from the CPU 401 according to the program loaded from the HD 404 to the RAM 403. The property information management server 20 further includes a storage unit 2000, which is implemented by the HD 404 illustrated in FIG. 2. The storage unit 2000 is an example of a memory or storage means.

In FIG. 3, one property information management server 20 has all the functions, but. Alternatively, the functions of the property information management server 20 may be allocated among multiple computers.

The transmission-reception unit 21 is an example of a transmission unit or a reception unit and is implemented by instructions from the CPU 401 illustrated in FIG. 2 as well as the communication I/F 407 illustrated in FIG. 2. The transmission-reception unit 41 transmits and receives various data (or information) to and from another terminal, device, apparatus, or system via the communication network N.

The screen generation unit 22 is implemented by instructions from the CPU 401 illustrated in FIG. 2 and generates screen information for displaying various screens. When the terminal device 10 executes a web application, the screen information is generated using languages such as HTML, XML, CSS, and JAVASCRIPT. Accordingly, the screen information may be referred to as a web application. When the terminal device 10 executes a client application, the terminal device 10 retains the screen information and receives information to be displayed in the format of, for example, XML.

The storing-reading unit 29 is an example of the storing control unit and is implemented by instructions from the CPU 401 illustrated in FIG. 2, as well as the HD 404, a media I/F 411, and a DVD-RW drive 412 illustrated in FIG. 2. The storing-reading unit 49 stores various data in or retrieves various data from the storage unit 2000, a storage medium 411a, or a DVD-RW 412a. The storage unit 2000, the storage medium 411a, and the DVD-RW 412a are examples of the memory or storage means.

### Property Management Information Management Table

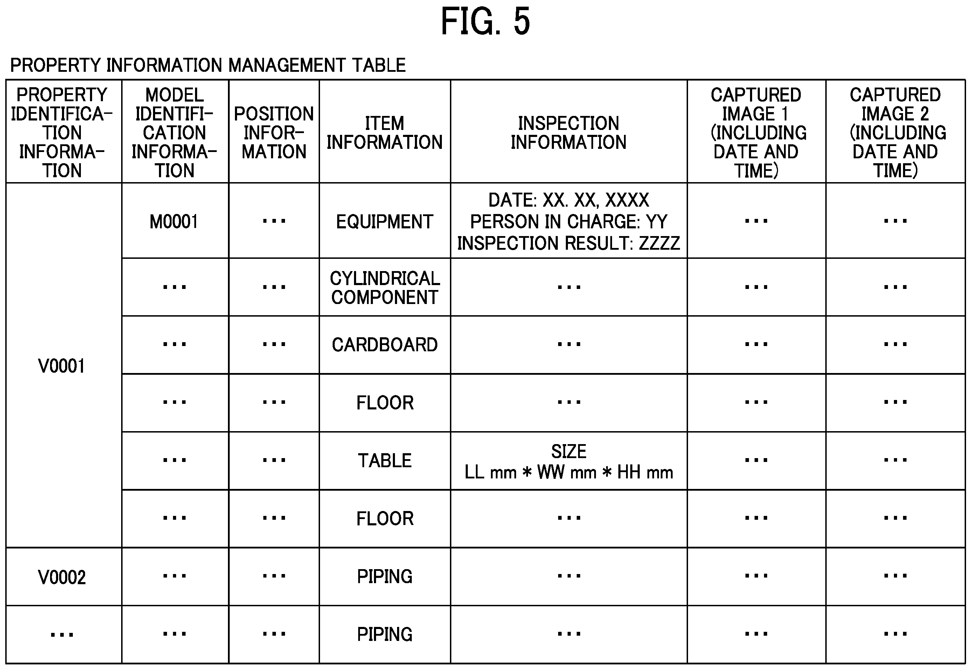

FIG. 5 is a conceptual diagram illustrating a property management information management table. The storage unit 2000 stores a property information management DB 2001 in the form of a property management information management table as illustrated in FIG. 5.

In the property management information management table, model identification information, position information, item information, inspection information, and one or more captured images are stored in association with property identification information. These items of information may be referred to as property management information. The contents of the table may be similar to those of the image information management table. The property management information management table does not store three-dimensional image information. However, the inspection information and one or more captured images are recorded for each item that has been inspected at least once. The inspection information and captured images in the property information management server 20 are directly registered by the user and are masters (copy sources) of pieces of inspection information stored in the image management server 40. The captured image may be an image in which multiple items are captured or may be another type of image, such as a layout diagram.

The form of the property information management DB 2001 is not limited to the property management information management table described above. Alternatively, the property information management DB 2001 may be in the form of a property management information management table in which position information, item information, inspection information, and one or more captured images are stored in association with model identification information without being associated with the property identification information.

### Update of Model and Generation of Text Information

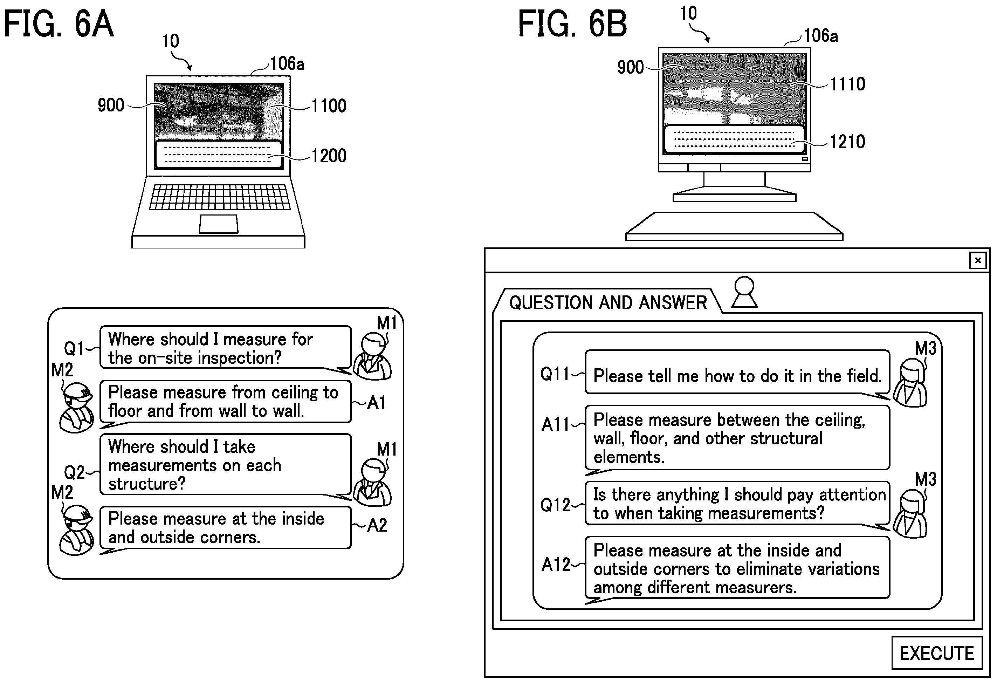

A model updating method and a text information generation method are described below with reference to FIGS. 6A to 7B. In FIGS. 6A to 7B, the inspection information is not used for updating the model and generating the text information. However, learning can be similarly performed by using the inspection information in place of or in addition to the conversations including an utterance Q1 and the like, described below.

FIGS. 6A and 6B are diagrams illustrating display screens on the terminal device 10 in a text information generation process and a model updating process, respectively. FIG. 6A is a diagram illustrating the model updating process. The display control unit 13 of the terminal device 10 displays a display screen 900 received from the image management server 40 on the display 106a. The display screen 900 includes a target image 1100 and text 1200.

The input receiving unit 12 of the terminal device 10 receives, via the microphone 109b, audio information representing a conversation including utterances Q1, A1, Q2, and A2 between a data provider M1 and a data provider M2, as input information input by a data provider on the display screen 900. The data providers M1 and M2 preferably have an abundant knowledge about the business, including tacit knowledge. The tacit knowledge model 4004 is updated based on such conversations between the data providers M1 and M2, allowing the user to obtain useful tacit knowledge comments.

The specifying unit 44 specifies the target image 1100, which is a portion of the display screen 900 excluding the text 1200.

The determination unit 43 determines the relevance level between a caption comment and the conversation including the utterances Q1, A1, Q2, and A2. The caption comment is obtained from the caption model 4003 using the target image 1100.

The updating unit 46 updates the tacit knowledge model 4004 with learning data including the target image 1100 and a tacit knowledge comment that is a comment determined to have low relevance among the utterances Q1, A1, Q2, and A2. The updating unit 46 updates the caption model 4003 with learning data including the target image 1100 and a caption comment that is a comment determined to have high relevance among the utterances Q1, A1, Q2, and A2.

Thus, the tacit knowledge model 4004 learns the correspondence between the target image 1100 and the utterances Q1, A1, Q2, and A2. Features are extracted from the target image 1100 using several feature extraction models suitable for images, such as a convolutional neural network (CNN). The features represent, for example, what object is in the image, where the object is, or work captured in the image. Thus, the tacit knowledge model 4004 learns the correspondence between the features of the image and the utterances Q1, A1, Q2, and A2.

FIG. 6B is a diagram illustrating the text information generation process.

The display control unit 13 of the terminal device 10 displays the display screen 900 received from the image management server 40 on the display 106a. The display screen 900 includes an image 1110 and text 1210.

The input receiving unit 12 of the terminal device 10 receives, via the microphone 109b, audio information representing questions Q11 and Q12 asked by a user M3, as input information input by a user on the display screen 900.

The specifying unit 44 specifies the image 1110 not including the text 1210 as a target image.

The text information generation unit 45 obtains a tacit knowledge comment from the image 1110 using the tacit knowledge model 4004. The tacit knowledge model 4004 extracts features from the image 1110, determines that the features of the image 1110 in FIG. 6B are similar to those of the image 1110 at the time of update, and identifies the utterances Q1, A1, Q2, and A2 related to the image 1110. The utterances Q1, A1, Q2, and A2 are tacit knowledge comments.

The text information generation unit 45 generates text information corresponding to answers A11 and A12 to the questions Q11 and Q12, respectively, using, for example, the tacit knowledge comments (the utterances Q1, A1, Q2, and A2) and the questions Q11 and Q12 through the large-scale language model 4005.

The display control unit 13 of the terminal device 10 displays the text information corresponding to the answers A11 and A12 received from the image management server 40 on the display 106a.

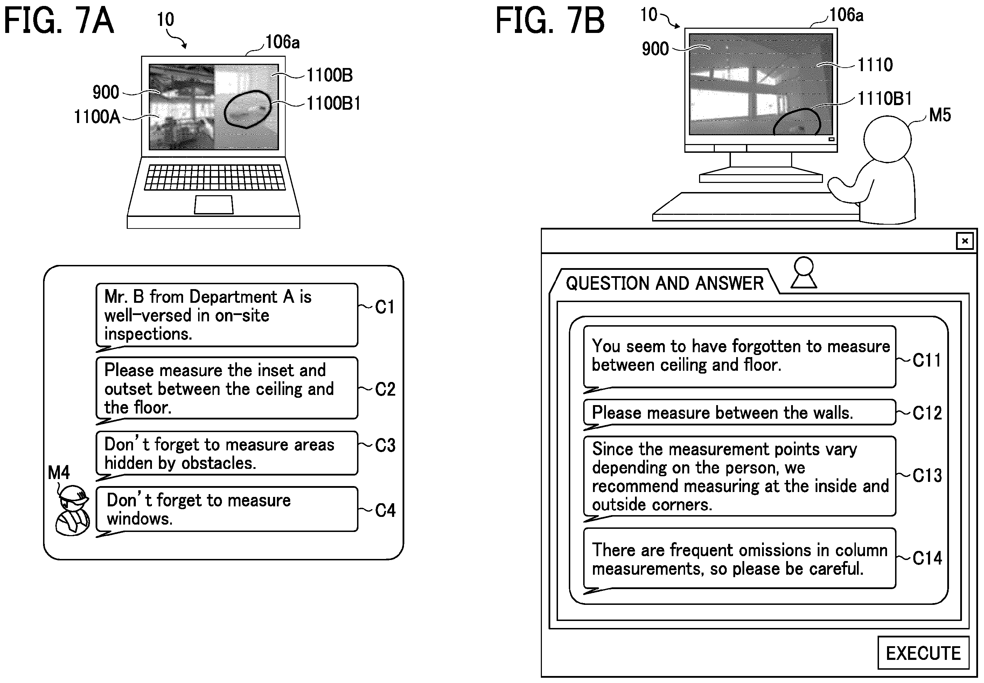

FIGS. 7A and 7B are diagrams each illustrating another display screen on the terminal device 10 in a text information generation process and a model updating process. The model updating process and text information generation process in which question sentences are not used are described below with reference to FIGS. 7A and 7B.

FIG. 7A is a diagram illustrating the model updating process. FIG. 7A illustrates an example in which the tacit knowledge model 4004 is updated by not a conversation between data providers but audio information representing utterances of a single data provider and a partial image.

The display control unit 13 of the terminal device 10 displays the display screen 900 received from the image management server 40 on the display 106a. The display screen 900 includes a first image 1100A and a second image 1100B.

The input receiving unit 12 of the terminal device 10 receives, via the keyboard 110a, text information representing comments C1 to C4 from a data provider M4, as input information input by a data provider on the display screen 900.

The input receiving unit 12 receives, from the mouse 110b, operation information indicating an operation performed by the data provider M4 to specify a partial image 1100B1 of the second image 1100B, as input information input by the data provider M4 on the display screen 900.

The specifying unit 44 may specify the partial image 1100B1 as a target image. Alternatively, the specifying unit 44 may specify the first image 1100A or the second image 1100B as a target image.

The determination unit 43 determines the relevance level between a caption comment, obtained from the caption model 4003 using the target image, and the comments C1 to C4.

The updating unit 46 updates the tacit knowledge model 4004 with learning data including the partial image 1100B1 and a tacit knowledge comment that is a comment determined to have low relevance among the comments C1 to C4, and updates the caption model 4003 with learning data including the partial image 1100B1 and a caption comment that is a comment determined to have high relevance among the comments C1 to C4.

Thus, the tacit knowledge model 4004 learns the correspondence between the partial image 1100B1 and the comments C1 to C4. Features are extracted from the partial image 1100B1 using several feature extraction models suitable for images, such as a CNN. The features represent, for example, what is located where, or work captured. Thus, the tacit knowledge model 4004 learns the correspondence between the features of the image and the comments C1 to C4.

FIG. 7B is a diagram illustrating the text information generation process. The display control unit 13 of the terminal device 10 displays the display screen 900 received from the image management server 40 on the display 106a. The display screen 900 includes the image 1110.

A user M5 does not input information to the display screen 900, and the input receiving unit 12 does not receive information input by the user M5 to the display screen 900. The specifying unit 44 specifies the image 1110, which is the entire display screen 900, as a target image.

When the user M5 performs a selecting operation for the partial image 1100B1 on the display screen 900, the input receiving unit 12 receives operation information indicating the selecting operation for the partial image 1100B1 from the mouse 110b as input information. In this case, the specifying unit 44 specifies the partial image in the display screen 900 as a target image based on the operation information.

The text information generation unit 45 obtains a tacit knowledge comment from the partial image 1100B1 using the tacit knowledge model 4004. The tacit knowledge model 4004 determines that the features of a partial image 1110B1 in FIG. 7B are similar to those of the partial image 1110B1 at the time of update, and identifies the comments C1 to C4 related to the partial image 1110B1. The tacit knowledge model 4004 extracts the comments C1 to C4 as tacit knowledge comments.

The text information generation unit 45 generates text information corresponding to comments C11 to C14 using, for example, the tacit knowledge comments through the large-scale language model 4005. When no question sentence is input, the text information generation unit 45 may use a preset fixed question to generate text information.

The display control unit 13 of the terminal device 10 displays the text information corresponding to the comments C11 to C14 received from the image management server 40 on the display 106a.

### Operation or Processing

As the process based on the inspection information, the three-dimensional image information, and the captured image, a method for displaying these items on one screen will be described below. In other words, the tacit knowledge model 4004 is not used.

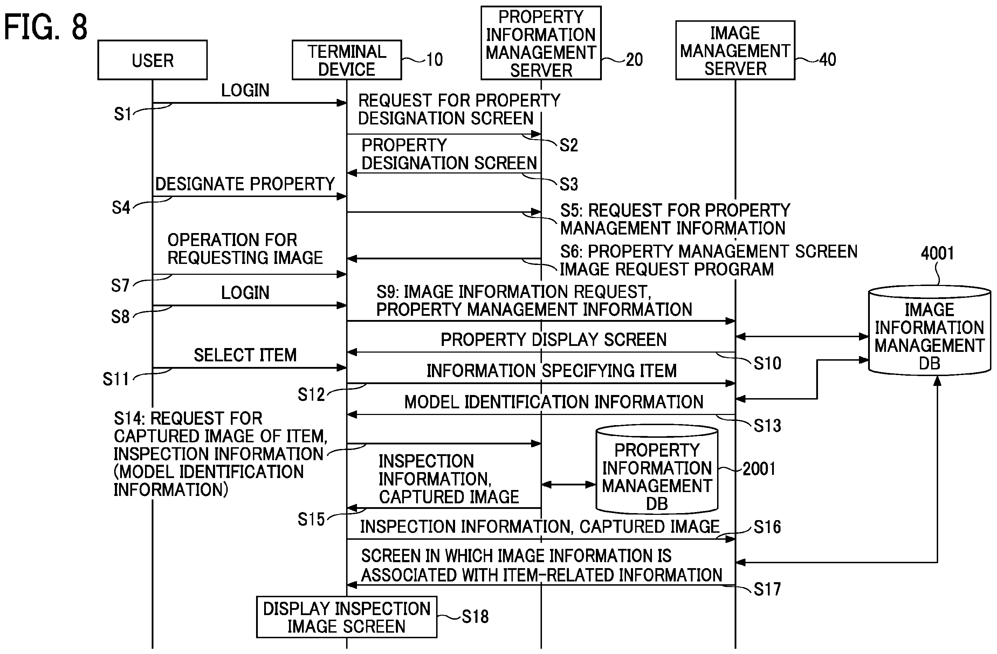

FIG. 8 is a sequence diagram illustrating a process of generating screen information in which inspection information, three-dimensional image information, and a captured image are arranged, as the process based on the inspection information, the three-dimensional image information, and the captured image.

In step S1, the user inputs a login operation into the terminal device 10. This login is a login to the property information management server 20. The input receiving unit 12 of the terminal device 10 receives the login operation. The login method may be any existing method. It is assumed that the login is successful.

The user logs in to the property information management server 20 and then logs in to the image management server 40. Alternatively, the user may log in to the image management server 40 first and then log in to the property information management server 20.

In step S2, in response to the successful login, the transmission-reception unit 11 of the terminal device 10 transmits a request for a property designation screen 200 to the property information management server 20.

In step S3, the transmission-reception unit 21 of the property information management server 20 receives the request for the property designation screen 200. The screen generation unit 22 generates the property designation screen 200, and the transmission-reception unit 21 transmits the screen information of the property designation screen 200 to the terminal device 10.

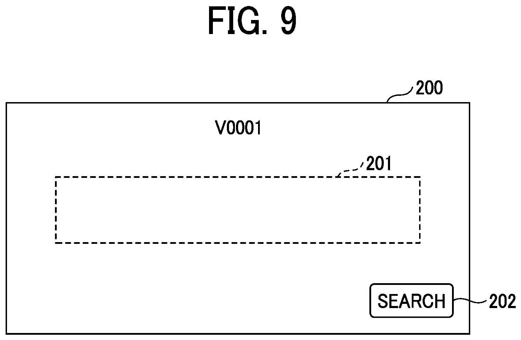

In step S4, the transmission-reception unit 11 of the terminal device 10 receives the screen information of the property designation screen 200. The display control unit 13 displays the property designation screen 200 (see FIG. 9) on the display 106a. The user inputs property identification information (for example, V0001) on the displayed property designation screen 200. The input receiving unit 12 of the terminal device 10 receives the property identification information.

In step S5, the transmission-reception unit 11 of the terminal device 10 transmits to the property information management server 20 a request for the property management information, specifying the property identification information.

In step S6, the transmission-reception unit 21 of the property information management server 20 receives the request for the property management information, and the storing-reading unit 29 searches the property information management DB 2001 using the property identification information as a search key. The property management information is information on a property (may be referred to as "property-related information" in the following description) associated with the property identification information. The screen generation unit 22 of the property information management server 20 generates the property management screen 210 for displaying the property management information, and the transmission-reception unit 21 transmits the screen information of the property management screen 210 to the terminal device 10.

The transmission-reception unit 21 transmits an image request program to the terminal device 10 to allow the terminal device 10 to obtain three-dimensional image information in response to a request for property management information. The image request program is, for example, a web application. The web application is installed in the property information management server 20 with the authorization of the administrator of the property information management server 20 obtained by the administrator of the image management server 40. Alternatively, a Uniform Resource Locator (URL) indicating the location of the image request program may be transmitted to the terminal device 10.

Since the web application is used to obtain three-dimensional image information from the image management server 40, the web application has the function of connecting to the image management server 40 and requesting or displaying three-dimensional image information.

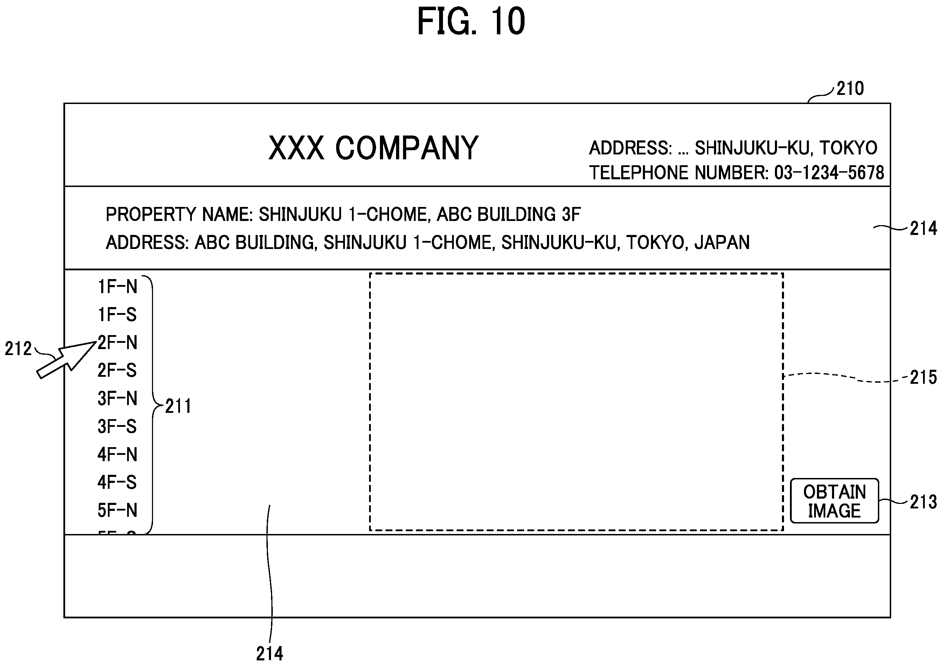

In step S7, the transmission-reception unit 11 of the terminal device 10 receives the screen information of the property management screen 210 and the image request program. The display control unit 13 displays the property management screen 210 (see FIG. 10) on the display 106a. Thus, the property management information is displayed. The user performs an operation to request the three-dimensional image information of the property in response to the property management information being displayed. For example, the operation to request the three-dimensional image information is pressing an image obtaining button 213 illustrated in FIG. 10. The input receiving unit 12 of the terminal device 10 receives the operation to request the three-dimensional image information of the property. The three-dimensional image information of the property includes the individual three-dimensional image information of items placed in a virtual space representing the property. The item is represented using 3D model shape information. Since the property has already been specified, a request for the three-dimensional image information of the property may be transmitted to the image management server 40 without the operation of the user.

The property management screen 210 includes a first display area 214 for displaying item-related information received from the property information management server 20 and a second display area 215 for displaying the individual three-dimensional image information of items received from the image management server 40. In step S7, the property management information is displayed in the first display area 214, whereas the second display area 215 is blank.

In step S8, when the user is not yet logged into the image management server 40, the user performs a login operation on the terminal device 10. This login operation is for logging into the image management server 40.

The input receiving unit 12 of the terminal device 10 receives the login operation. The login method may be any existing method. It is assumed that the login is successful. The login operation of the user may be omitted by using, for example, single sign-on.

In step S9, the terminal device 10 executes the image request program to request the three-dimensional image information.

Accordingly, the transmission-reception unit 11 specifies the property identification information of the property selected by the user and transmits a request for the three-dimensional image information of the property to the image management server 40. The transmission-reception unit 11 may transmit the URL of the property information management server 20 to the image management server 40 so that the terminal device 10 is redirected to the property information management server 20. The three-dimensional image information of the property is an image of an item placed in the virtual space representing the property. Since the item is represented using the 3D model shape information, the terminal device 10 projects the three-dimensional model shape of the item onto a two-dimensional plane to generate a planar image. The user can browse any desired item while changing the viewpoint. The transmission-reception unit 11 may transmit the property management information obtained from the property information management server 20 to the image management server 40. The image request program receives property management information from the web application connected to the property information management server 20 as, for example, a URL parameter.

In step S10, the transmission-reception unit 41 of the image management server 40 receives the request for the three-dimensional image information of the property. The storing-reading unit 49 searches the image information management DB 4001 using the property identification information as a search key, and retrieves the individual three-dimensional image information of items. The processing unit 47 requests the screen generation unit 42 to generate a screen including the three-dimensional image information of the property and the captured image. The screen generation unit 42 generates a screen corresponding to the second display area 215 in which the three-dimensional image information and a captured image of each item are arranged. The screen generation unit 42 generates a screen corresponding to the first display area 214 in which the captured image is arranged. The transmission-reception unit 41 transmits the screen information of the screens corresponding to the first display area 214 and the second display area 215 to the terminal device 10. This screen information includes three-dimensional image information in which all the items included in the property are arranged within the property, and the user can change the viewpoint as desired.

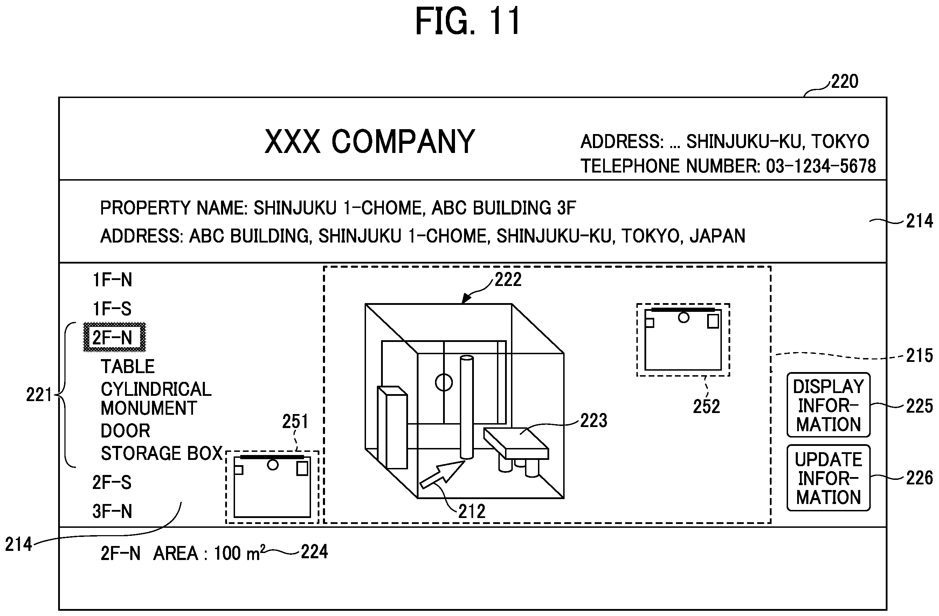

In step S11, the transmission-reception unit 11 of the terminal device 10 receives the screen information of the screen including the first display area 214 and the second display area 215. The display control unit 13 displays on the display 106a a property display screen 220 including the first display area 214 and the second display area 215 as illustrated in FIG. 11. In the stage of step S11, the individual three-dimensional image information of items is displayed in the second display area 215. In the first display area 214, for example, an item list 221, which is the list of items placed in the property and generated from the property management information, is displayed. Thus, the item list 221 and the three-dimensional image information of the property are displayed on one screen. The item list is included in the property management information. The user specifies (selects) any desired item from the three-dimensional image information of the property. When the user specifies a desired item, the inspection information and the captured image of the item are requested. The input receiving unit 12 of the terminal device 10 receives a selecting operation for the item. The item may be specified by, for example, the coordinates clicked by the user, or model identification information may be specified by the coordinates.

In step S12, when the user presses a display information button 225, the transmission-reception unit 11 of the terminal device 10 transmits information specifying the item to the image management server 40.

In step S13, the transmission-reception unit 41 of the image management server 40 receives the information specifying the item. The storing-reading unit 49 identifies the model identification information of the item having the closest position information based on information for specifying the item (in this case, position information) from the image information management DB 4001. The transmission-reception unit 41 transmits the model identification information to the terminal device 10. When the information for specifying the item transmitted in step S12 is the model identification information, the search of the image information management DB 4001 is not necessary.

The image management server 40 transmits the model identification information to obtain the latest inspection information from the property information management server 20.

In step S14, the transmission-reception unit 11 of the terminal device 10 receives the model identification information. For example, the image management server 40 transmits the URL of the property information management server 20 to the terminal device 10 and causes the terminal device 10 to be redirected thereto. Accordingly, the transmission-reception unit 11 of the terminal device 10 transmits a request for the inspection information and the captured image of the item to the property information management server 20, specifying the model identification information.

In step S15, the transmission-reception unit 21 of the property information management server 20 receives the request for the inspection information and the captured image of the item. The storing-reading unit 29 searches the property information management DB 2001 using the model identification information as a search key to retrieve the inspection information and the captured image. The transmission-reception unit 21 transmits the inspection information and the captured image to the terminal device 10. In a case where multiple captured images are registered in the property information management DB 2001, the storing-reading unit 29 may obtain the latest captured image, obtain N newly captured images without duplication, or obtain all the captured images.

In step S16, in response to receiving the inspection information and the captured image, the transmission-reception unit 11 of the terminal device 10 transmits the inspection information and the captured image to the image management server 40 together with the model identification information. When the transmission-reception unit 41 of the image management server 40 receives the inspection information and the captured image as a response to the action in step S13, the storing-reading unit 49 identifies the item by the model identification information and stores (or overwrites) the latest inspection information and captured image in the image information management DB 4001. In other words, the inspection information and the captured image that are not present in the image information management DB 4001 are stored.

In step S17, the processing unit 47 associates the three-dimensional image information of the item corresponding to the model identification information with the latest inspection information and the captured image, and requests the screen generation unit 42 to generate a screen including these items of information. As the process based on the item-related information and the three-dimensional image information, the screen generation unit 42 generates the screen corresponding to the second display area 215 in which the inspection information, the captured image, and the three-dimensional image information of the item are displayed in association with each other. The screen generation unit 42 may perform an update process of adding only the inspection information to the screen corresponding to the second display area 215. The screen generation unit 42 generates a screen for displaying the captured image in the first display area 214. The transmission-reception unit 41 transmits the screen information of the screen corresponding to the second display area 215 to the terminal device 10.

In step S18, the transmission-reception unit 11 of the terminal device 10 receives the screen information of the screen corresponding to the second display area 215. The display control unit 13 displays on the display 106a an inspection image screen 230 including the first display area 214 and the second display area 215 as illustrated in FIG. 12. In step S18, the item list (a first portion of at least a portion of the information related to the item) and the captured image are displayed in the first display area 214, and the three-dimensional image information of the item, the inspection information (a second portion of at least a portion of the information related to the item) corresponding to the three-dimensional image information, and the captured image are displayed in the second display area 215.

### Screens

FIG. 9 is a diagram illustrating the property designation screen 200 for inputting property identification information. The property designation screen 200 includes a property identification information input field 201 and a search button 202. When the user inputs the property identification information in the property identification information input field 201 and presses the search button 202, a list of room numbers in FIG. 10 is displayed on the property management screen 210.

FIG. 10 is a diagram illustrating the property management screen 210. The property management screen 210 includes the first display area 214 for displaying item-related information obtained from the property information management server 20 and the second display area 215 for displaying the three-dimensional image information of the item obtained from the image management server 40. The first display area 214 is the region of the property management screen 210 other than the second display area 215.

The first display area 214 includes a room number list 211, which is a list of numbers of rooms in the property specified by the property identification information. The room number list 211 corresponds to property management information and includes items included in a property.

Depending on the property, room numbers may not be displayed, and the property designation screen 200 in FIG. 9 may transition to the property display screen 220 in FIG. 11 to display the three-dimensional image information of the property. The user selects, with a mouse cursor 212, the room number of the room whose three-dimensional image information is to be displayed. When the user presses the image obtaining button 213, the property display screen 220 is displayed.

The second display area 215, which is the region of the screen other than the first display area 214, may be displayed by a program, such as iframe, on a web application.

FIG. 11 is a diagram illustrating the property display screen 220. The property display screen 220 includes the first display area 214 and the second display area 215. In the first display area 214 of the property display screen 220, an item list 221 and a captured image 251 are displayed. On the item list 221, the names of the items placed in the property are displayed. The items in this room are a table, a cylindrical monument, a door, and a storage box. The captured image 251 displayed in FIG. 11 is not a captured image captured at the time of inspection but a layout diagram. In this way, a layout diagram may be displayed instead of a captured image before a property is designated. The image management server 40 can transmit a layout diagram as a substitute for the captured image to the terminal device 10.

In the second display area 215 of the property display screen 220, three-dimensional image information 222 and a captured image 252 (layout diagram) of these items are displayed. The captured image 252 in the second display area 215 may be the same as the captured image 251 in the first display area 214. For example, to display the captured image 252 even when the second display area 215 is displayed in full screen, the same images (the captured images 251 and 252) are displayed in the first display area 214 and the second display area 215.

Alternatively, another image related to the property, different from the layout diagram, may be displayed in the second display area 215.

Then, the user selects, with a mouse cursor 212, an item whose inspection information and a captured image to be displayed from the three-dimensional image information. The captured image mentioned here is not a layout diagram. With this selecting operation, the coordinates of the item are determined as information for identifying the item. Alternatively, the user may specify an item from the item list 221. In this case, the model identification information is specified at the time of selection. When the user presses the display information button 225, the inspection image screen 230 is displayed. The display information button 225 is used for displaying text information generated based on the tacit knowledge comment as described later, in addition to displaying the inspection information and the captured image. When the user presses an update information button 226, the tacit knowledge model 4004 is updated.

In FIG. 11, size information 224 indicating the floor area is displayed as the property-related information.

The size information 224 (floor area) may be a measured value or may be included in the property management information.

As illustrated in FIG. 11, the terminal device 10 displays the property management information managed by the property information management server 20, the three-dimensional image information 222 of the property managed by the image management server 40, and the captured images 251 and 252 on one screen. The user can check the three-dimensional image information 222 and the captured images 251 and 252 of the property while viewing the property management information.

FIG. 12 is a diagram illustrating the inspection image screen 230. The inspection image screen 230 includes the first display area 214 and the second display area 215. In FIG. 12, three-dimensional image information 223 of the table selected by the user is displayed in the second display area 215 as the item. The second display area 215 displays inspection information 232 and a captured image 254 associated with the table selected by the user. For example, the inspection information 232 is "table: Size LL mm*WW mm*HH mm." The captured image 254 in the second display area 215 is obtained from the property information management server 20. The terminal device 10 can display one or more captured images, such as past captured images, in the second display area 215 in addition to the captured image 254.

In the first display area 214, a captured image 253 identical to the captured image 254 in the second display area 215 may be displayed.

In this manner, the terminal device 10 displays the three-dimensional image information 223 of the item, the inspection information 232 of the item whose three-dimensional image information 223 is displayed, and the captured image 254 of the item on one screen.

In the state of FIG. 12, the user moves the mouse cursor 212 to the cylindrical monument on the item list 221 and presses the cylindrical monument. The image management server 40 is notified that the cylindrical monument has been pressed. Then, the screen generation unit 42 generates a screen corresponding to the second display area 215 in which the inspection information of the cylindrical monument, the three-dimensional image information of the item, and N captured images are displayed in association with each other. The transmission-reception unit 41 transmits the screen information of the screen corresponding to the second display area 215 to the terminal device 10.

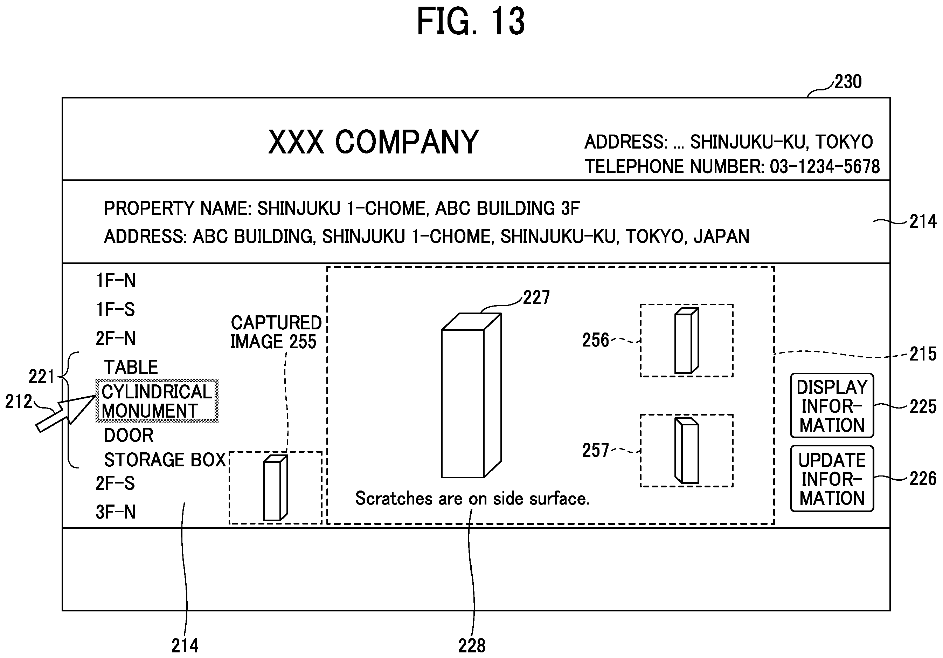

FIG. 13 is a diagram illustrating switching of display of the three-dimensional image information and the inspection information of the item in the second display area 215. In FIG. 13, an item "cylindrical monument" is selected.

Accordingly, three-dimensional image information 227 of the cylindrical monument and inspection information 228 thereof are displayed in the second display area 215. A captured image 255 displayed in the first display area 214 may be identical to a latest captured image 256 displayed in the second display area 215.

As illustrated in FIG. 12, when the three-dimensional image information 223 of the first item (table) is displayed, information (inspection information 232) related to the first item associated with the three-dimensional image information of the first item is displayed. When the second item (cylindrical monument) is selected in this state, the displayed three-dimensional image information is switched from that of the first item to the three-dimensional image information 227 of the second item (cylindrical monument), and the information (inspection information 228) and captured images 256 and 257 of the second item associated with the three-dimensional image information 227 are displayed.

As illustrated in FIG. 13, the terminal device 10 displays the multiple captured images 256 and 257 in the second display area 215. In the second display area 215, the two captured images 256 and 257 obtained by capturing the cylindrical monument from different viewpoints are displayed. The captured image 257 is, for example, an image captured before capturing of the latest captured image 256. The user can display multiple captured images 256 and 257 by designating the image capturing date and time. The number of captured images displayed in the second display area 215 is not limited to two, and three or more captured images may be displayed. The user can enlarge the selected captured image.

Obtaining Inspection Information by Image Management Server from Property Information Management Server

In FIG. 8, the image management server 40 obtains the inspection information and the captured image via the terminal device 10 from the property information management server 20. Alternatively, the image management server 40 may directly obtain the inspection information and the captured image from the property information management server 20.

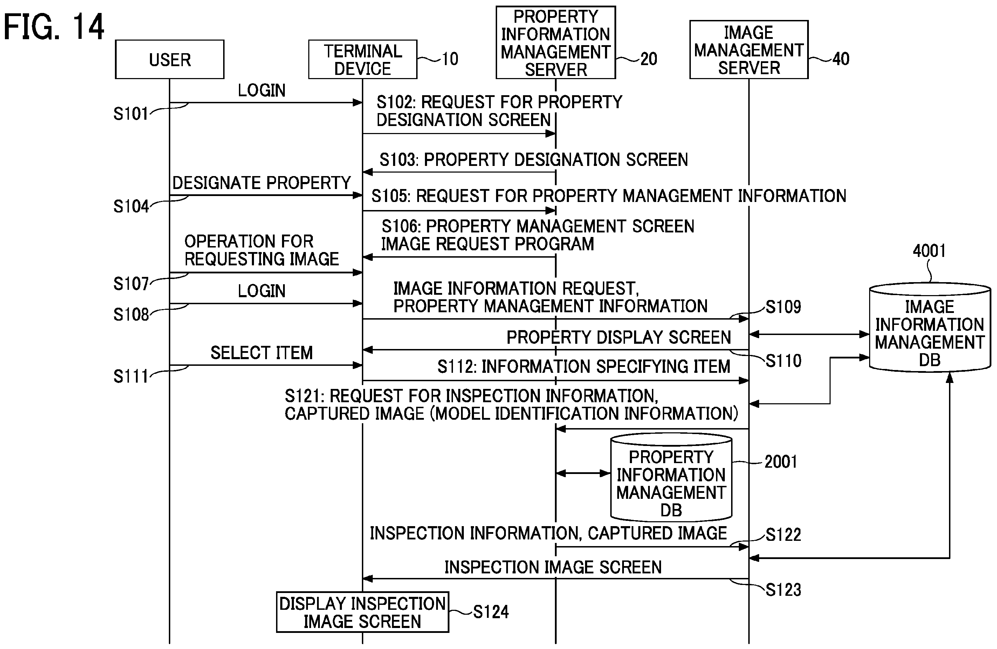

FIG. 14 is a sequence diagram illustrating a process of generating screen information based on the inspection information, the three-dimensional image information, and the captured image. The following description with reference to FIG. 14 is focused on the differences from FIG. 8. Steps S101 to S112 in FIG. 14 may be similar to steps S1 to S12 in FIG. 8.

In step S121, the transmission-reception unit 41 of the image management server 40 receives the information specifying the item. The storing-reading unit 49 identifies the model identification information of the item having the closest position information based on information for specifying the item (in this case, position information) from the image information management DB 4001. The processing unit 47 requests the transmission-reception unit 41 to request the inspection information. The transmission-reception unit 41 calls the API of the property information management server 20 to transmit a request for the inspection information and the captured image to the property information management server 20, specifying the model identification information. When the information for specifying the item is the model identification information, the search of the image information management DB 4001 is not necessary.

In step S122, the transmission-reception unit 21 of the property information management server 20 receives the request for the inspection information and the captured image. The storing-reading unit 29 searches the property information management DB 2001 using the model identification information as a search key and retrieves the inspection information and the captured image. The transmission-reception unit 21 transmits the inspection information and the captured image to the image management server 40. The transmission-reception unit 41 obtains the inspection information and the captured image from the property information management server 20 as a response to the request in step S21.

Subsequent steps S123 and S124 may be similar to steps S17 and S18 in FIG. 8. In the process as illustrated in FIG. 14, changing the connection destination performed by the terminal device 10 is obviated, which shortens the time until the inspection image screen 230 is displayed.

Since the image management server 40 described above performs the process based on the inspection information and the three-dimensional image information, the terminal device 10 can display the second display area 215 of the inspection image screen 230, which includes the three-dimensional image information, and the inspection information and the captured image associated with the three-dimensional image information. The image management server 40 can execute the process based on the inspection information and the captured image managed by the property information management server 20, and the three-dimensional image information managed by the image management server 40, without the need for adding a processing function to the property information management server 20.

The property information management server 20 may perform a part of the process based on the inspection information and the captured image managed by the property information management server 20, and the three-dimensional image information managed by the image management server 40. Even in this case, the process load on the property information management server 20 is reduced as compared with a case where the property information management server 20 performs the entire process based on the inspection information and the captured image managed by the property information management server 20 and the three-dimensional image information managed by the image management server 40.

The three-dimensional image information and the inspection information associated with the three-dimensional image information may be displayed either overlapping or not overlapping each other.

The first display area 214 and the second display area 215 may be displayed either overlapping or not overlapping each other.

Further, each of the first display area 214 and the second display area 215 may be divided into multiple areas, and the divided areas may be displayed in a mixed manner.

### Second Embodiment

In a second embodiment described below, the image management server 40 obtains a tacit knowledge comment from a tacit knowledge model using inspection information, three-dimensional image information, and a captured image, and generates text information based on the tacit knowledge comment.

The hardware configuration illustrated in FIG. 2 and the functional configuration illustrated in FIG. 3 of the above-described first embodiment are applicable to the description below.

### Operation or Processing

### Learning Phase (Model Updating)

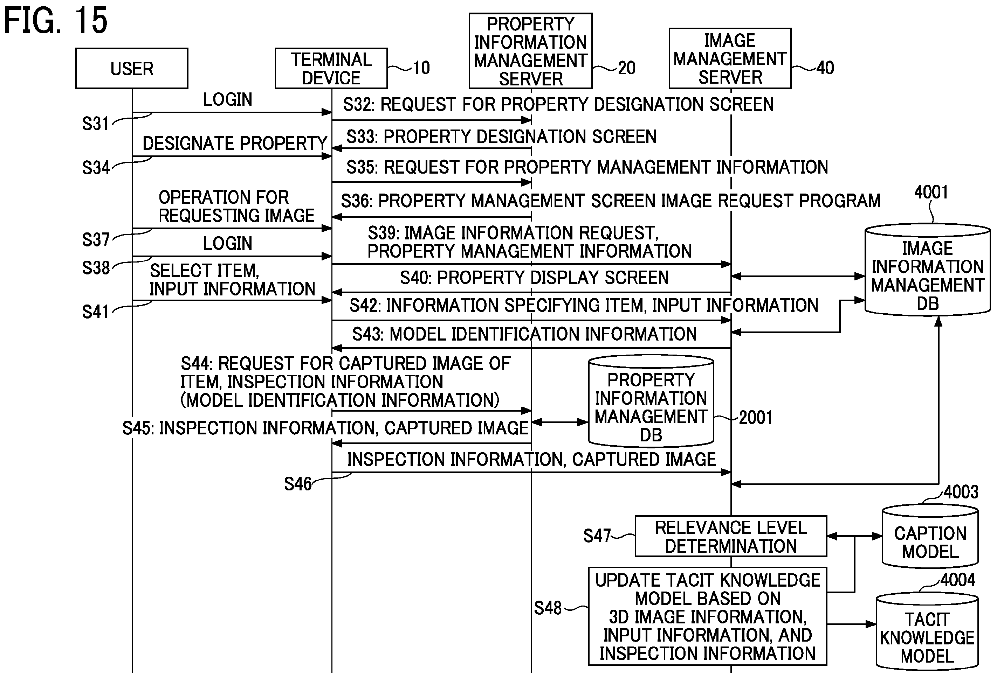

A model updating process in which the tacit knowledge model 4004 learns data will be described with reference to FIG. 15. FIG. 15 is a sequence diagram illustrating a model updating process. In the description with reference to FIG. 15, the differences from FIG. 8 are focused. Steps S31 to S40 may be similar to step S1 to S10 of FIG. 8.

In step S41, the transmission-reception unit 11 of the terminal device 10 receives the screen information of the screen corresponding to the second display area 215. The display control unit 13 displays on the display 106a a property display screen 220 including the first display area 214 and the second display area 215 as illustrated in FIG. 11. For example, the item list 221 of items placed in the property, the three-dimensional image information 222 of the property, and a captured image (layout diagram) of the property are displayed. The user specifies (selects) any desired item from the three-dimensional image information. When the user specifies a desired item, the inspection information and the captured image of the item are requested. The input receiving unit 12 of the terminal device 10 receives a selecting operation for the item. The item may be specified by, for example, the coordinates clicked by the user, or model identification information may be specified by the coordinates. The user inputs a comment on the item to the terminal device 10, for example, by voice via the microphone 109b (FIG. 2) or using the keyboard 110a (FIG. 2) as described with reference to FIGS. 6A to 7B. Thus, the terminal device 10 receives text information or audio information representing the comment. The comment may be referred to as input information. The comment can be a tacit knowledge comment. The comment may include a caption comment describing the item.

In step S42, the transmission-reception unit 11 of the terminal device 10 transmits the information for specifying the item and the input information to the image management server 40.

Steps S43 to S46 may be similar to step S13 to S16 of FIG. 8.

In step S47, the transmission-reception unit 41 of the image management server 40 receives the inspection information and the captured image from the terminal device 10. The storing-reading unit 49 identifies the item by the model identification information, and stores the latest inspection information and the captured image in the image information management DB 4001. The determination unit 43 obtains the caption comment specified by the model identification information from the caption model 4003, and determines the relevance between the caption comment and the comment included in the input information received in step S42. The determination unit 43 may determine the relevance between the obtained caption comment and the entire comment included in the input information received in step S42, or may divide the comment included in the input information received in step S42 into multiple comments and then determine the relevance between the obtained caption comment and each divided comment.

In step S48, the updating unit 46 associates, as a caption comment, the comment determined to have high relevance in step S47 with the model identification information, thereby updating the caption model 4003.

Further, the updating unit 46 updates the tacit knowledge model 4004 with learning data including the comment determined to have low relevance in the step S47, the inspection information, the three-dimensional image information of the item (specified in the step S42) associated with the comment, and the captured image received in step S46. In other words, the correspondence among the three-dimensional image information, the captured image, the comment, and the inspection information of the item is learned. Features are extracted from the three-dimensional image information and the captured image of the item using several feature extraction models suitable for images, such as CNN. The features represent, for example, what is located where, or work captured.

Thus, the tacit knowledge model 4004 learns the correspondence between the three-dimensional image information of the item and the features of the captured image, and the comment and the inspection information.

It is not necessary to use both the comment and the inspection information, and the tacit knowledge model 4004 can be updated with at least one of the comment and the inspection information.

In FIG. 15, the image management server 40 obtains the inspection information and the captured image from the terminal device 10, but the inspection information and the captured image may be obtained from the property information management server 20 as illustrated in FIG. 14.

### Screen in Learning Phase

The screens displayed by the terminal device 10 in the learning phase are similar to those in FIGS. 9 to 11. The user can input information on the property display screen 220 in FIG. 11. The information corresponding to the inspection image screen 230 FIG. 12 in which the inspection information and the captured image are displayed is displayed in an inference phase described later.

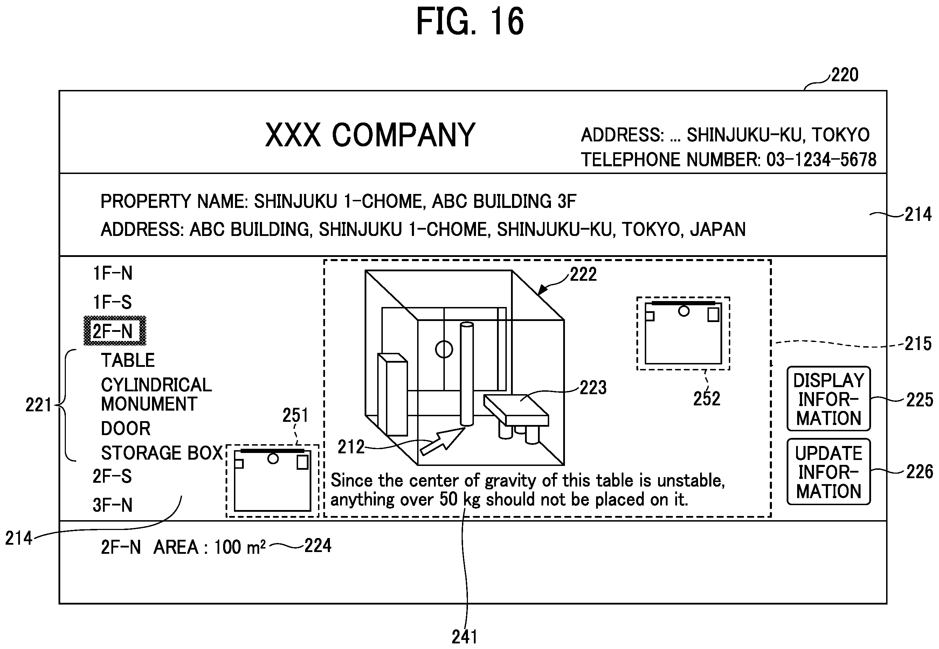

FIG. 16 is a diagram illustrating the property display screen 220 displayed by the terminal device 10. The property display screen 220 in FIG. 16 includes the first display area 214 and the second display area 215. The size information 224 indicating the floor area and the captured image 251 are displayed as property-related information in the first display area 214. Similar to FIG. 11, the captured image is a layout diagram.

The second display area 215 displays the three-dimensional image information 223 of the table, input information 241 input in association with the three-dimensional image information 223 of the table, and the captured image 252. As the input information 241, a message stating "Since the center of gravity of this table is unstable, anything over 50 kg should not be placed on it" is displayed. Similar to FIG. 11, the captured image 252 is a layout diagram. The image management server 40 can update the tacit knowledge model 4004 using such input information 241, the inspection information, the three-dimensional image information 223, and the captured image 252. The size information 224 (floor area), which is property-related information, can be a caption comment.

### Inference Phase (Generation of Text Information)

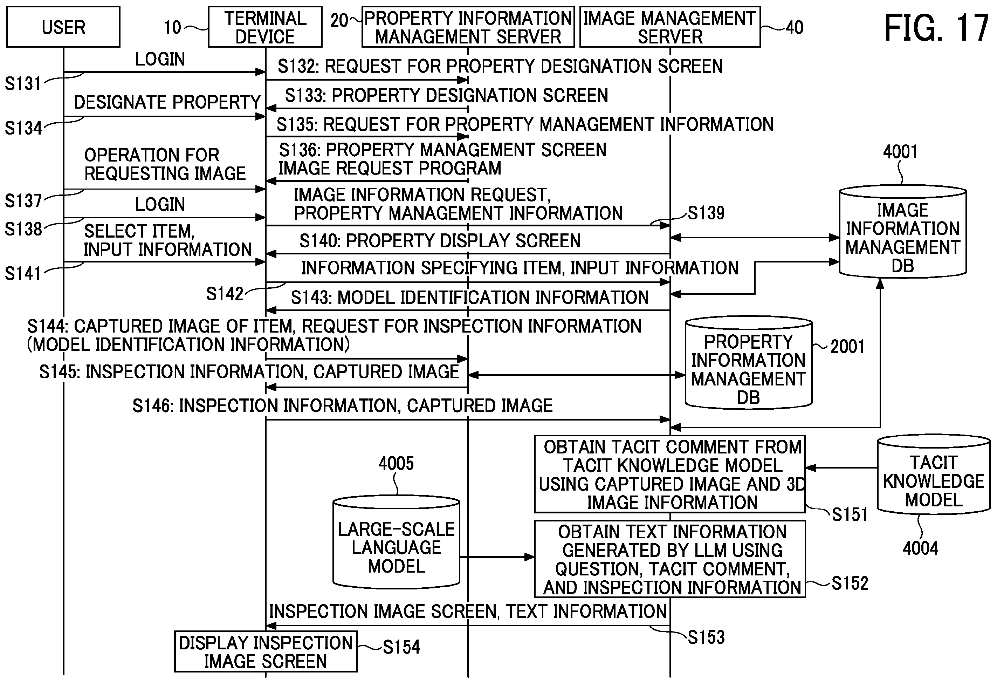

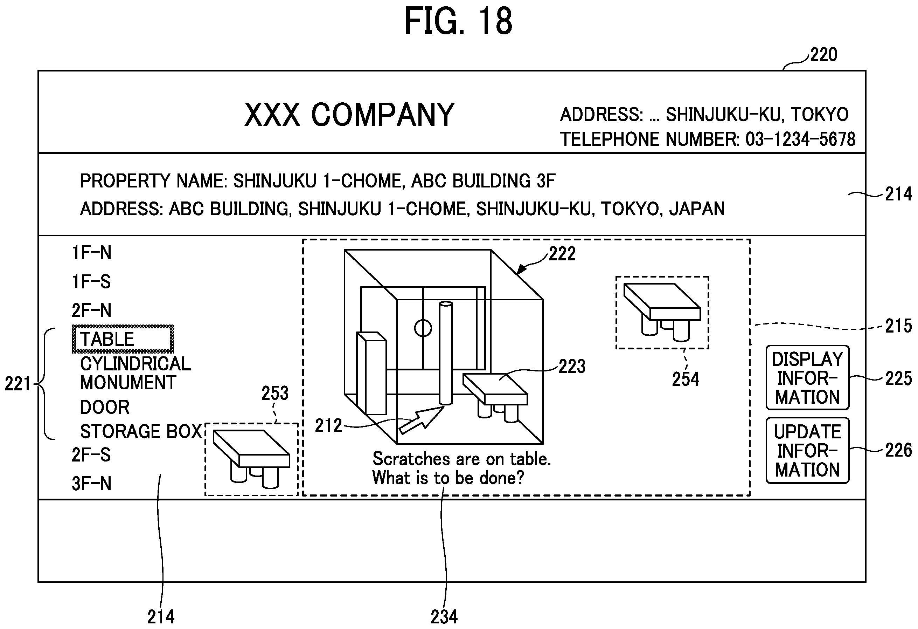

A process of generating text information using the tacit knowledge model 4004 is described below with reference to FIG. 17. FIG. 17 is a sequence diagram illustrating the process of generating text information. The following description with reference to FIG. 17 focuses on the differences from FIG. 8. Steps S131 to S146 may be similar to steps S1 to S16 of FIG. 8. However, in step S141, the users input a question sentence related to the item as illustrated in FIG. 18.

In step S151, the transmission-reception unit 41 of the image management server 40 receives the inspection information and the captured image. The storing-reading unit 49 identifies the item by the model identification information, and stores the latest inspection information and the captured image in the image information management DB 4001. The processing unit 47 requests the text information generation unit 45 to generate text information. The text information generation unit 45 obtains a tacit knowledge comment corresponding to the three-dimensional image information and the captured image of the item from the tacit knowledge model 4004. The tacit knowledge model 4004 extracts features from the three-dimensional image information and the captured image of the item and identifies at least one of a comment and inspection information matching the features. The tacit knowledge model 4004 extracts at least one of such a comment and inspection information as a tacit knowledge comment.

In step S152, the text information generation unit 45 obtains text information generated by the large-scale language model 4005 using the tacit knowledge comment, the input information (question sentence), and the inspection information. The large-scale language model 4005 can generates detailed text information using these items of information. The text information generation unit 45 may convert audio information included in the input information into text information. The text information generated by the text information generation unit 45 may be either audio information or text information.

The text information generation unit 45 may generate the text information without using any inspection information or question sentence. The text information generation unit 45 may use a fixed question generated in the system. In this case, the question sentence is not visible to the user. Alternatively, the text information generation unit 45 may display fixed questions generated in the system on a display, prompt the user to select one of the fixed questions, and use the selected question.

Although the inspection information is not essential as described above, generating text information from the large-scale language model 4005 using the inspection information provides more detailed information on the item. For example, when the inspection information includes the degree of damage to the item, text information including an appropriate handling according to the degree of damage can be generated.

In step S153, the processing unit 47 associates the three-dimensional image information of the item corresponding to the model identification information, the captured image, and the text information, and requests the screen generation unit 42 to display these items of information. The screen generation unit 42 generates a screen corresponding to the second display area 215 that displays the three-dimensional image information and the captured image of the item, and the text information corresponding to the three-dimensional image information and the captured image of the item. The screen generation unit 42 may perform an update process of adding only the text information to the screen corresponding to the second display area 215. The transmission-reception unit 41 of the image management server 40 transmits the screen information of the screen corresponding to the second display area 215 to the terminal device 10. The transmission-reception unit 11 of the terminal device 10 receives the screen information of the screen corresponding to the second display area 215 from the image management server 40.

In step S154, the display control unit 13 of the terminal device 10 displays on the display 106a the inspection image screen 230 including the first display area 214 and the second display area 215 including text information as illustrated in FIG. 19. Alternatively, the conversion unit 15 may convert the received text information into audio, and the audio control unit 14 may cause the speaker 109a to output the audio converted from the text information. When the received text information is audio information, the audio converted from the text information is output through the speaker 109a. Alternatively, the conversion unit 15 converts the received text information in the form of audio information into text and displays the text on the display 106a.

In FIG. 17, the image management server 40 obtains the inspection information and the captured image from the terminal device 10, but the inspection information and the captured image may be obtained from the property information management server 20 as illustrated in FIG. 14.

### Screen in Inference Phase

The screens displayed by the terminal device 10 in the inference phase are similar to those in FIGS. 9 to 11. The user can input information on the property display screen 220 in FIG. 11.

FIG. 18 is a diagram illustrating the property display screen 220 in the inference phase. The property display screen 220 includes the first display area 214 and the second display area 215. The screen structure in FIG. 18 is similar to that in FIG. 11, but the user inputs question sentences as input information 234, differently from FIG. 11. The second display area 215 displays the three-dimensional image information 223 and the captured image 254 of the table, and input information (question sentences) 234 related to the three-dimensional image information 223 of the table. For example, the input information (question sentences) 234 in FIG. 18 is a message stating "Scratches are on the table. What is to be done?" Along with the input information (question sentences) 234, the user presses the display information button 225 to request the generation of text information using the tacit knowledge model.

FIG. 19 is a diagram illustrating text information displayed on the inspection image screen 230. The inspection image screen 230 includes the first display area 214 and the second display area 215. The second display area 215 displays the three-dimensional image information 223 of the table, two captured images 254 and 258, and text information 235 related to the three-dimensional image information 223 of the table. The text information 235 is a message stating "Scratches less than 1 mm deep are repaired with paint. Scratches of 1 mm or deeper than are polished." The text information 235 is generated by the large-scale language model 4005 from the three-dimensional image information 223 of the item, the inspection information, the captured image 254, and the input information (question sentences) 234. For example, when a scratch on the item is detected from the three-dimensional image information 223 or the captured image 254, a tacit knowledge comment related to the scratch on the item is extracted. Since the tacit knowledge comment, the question related to the scratches, and the inspection information for determining the current state of the scratches are input to the large-scale language model 4005, text information suitable for the current scratches are generated.

The text information 235 is not the inspection information itself but includes at least one of text information generated by a tacit knowledge model 4004 trained to learn the inspection information, and text information generated by the large-scale language model 4005 based on the inspection information. The text information 235 is, in a sense, the result of process based on the inspection information and the three-dimensional image information.

### Third Embodiment

In a third embodiment described below, the image management server 40 generates an image from a captured image and text information.

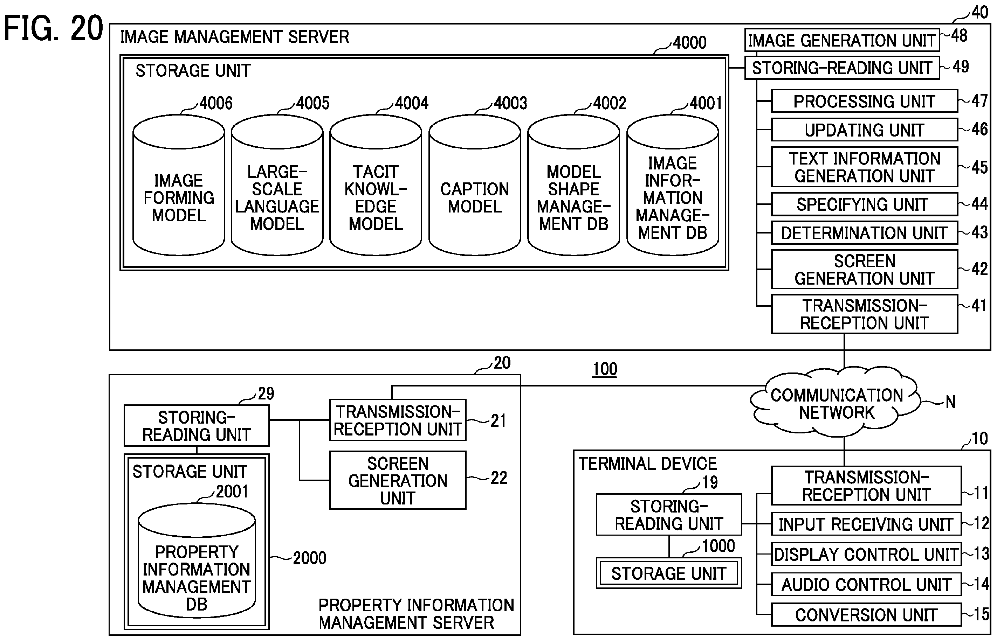

FIG. 20 is a block diagram illustrating a functional configuration of the image management server 40, the property information management server 20, and the terminal device 10 in the information processing system 100. The following description with reference to FIG. 20 focuses on the differences from FIG. 3.

The image management server 40 illustrated in FIG. 20 further includes an image generation unit 48. Further, an image generation model 4006 is built in the storage unit 4000 of the image management server 40. The other configurations may be similar to those illustrated in FIG. 3.

The image generation unit 48 is implemented by the instructions from the CPU 401 illustrated in FIG. 2, and inputs text data, or images in addition to text data, to the image generation model 4006 to generate image information.

The image generation model 4006 is a machine learning model (generative AI) that generates images from text data, or from images in addition to text data. The image generation model 4006 is trained using, for example, learning data including text data and images. The learning data includes input for learning and an image as a correct answer to the input. The input includes text data, or images in addition to text data. For example, learning may be performed so that an image generated by the image generation model 4006 to which learning data, which includes text data or images in addition to text data, are input, approaches a correct answer image included in the learning data.

### Learning Phase

The process in the learning phase may be similar to that of FIG. 15. In step S48 of FIG. 15, the updating unit 46 updates the tacit knowledge model 4004 such that the tacit knowledge model 4004 learns a correspondence between inputs, including the comment determined to have low relevance in the step S47 and the inspection information, and an output that is the three-dimensional image information or the captured image of the item.

Alternatively, the updating unit 46 updates the tacit knowledge model 4004 such that the tacit knowledge model 4004 learns a correspondence between inputs, including the comment, the inspection information, and the three-dimensional image information (or the captured image) of the item, and an output that is the captured image (or three-dimensional image information) of the item.

### Inference Phase (Generation of Text Information)

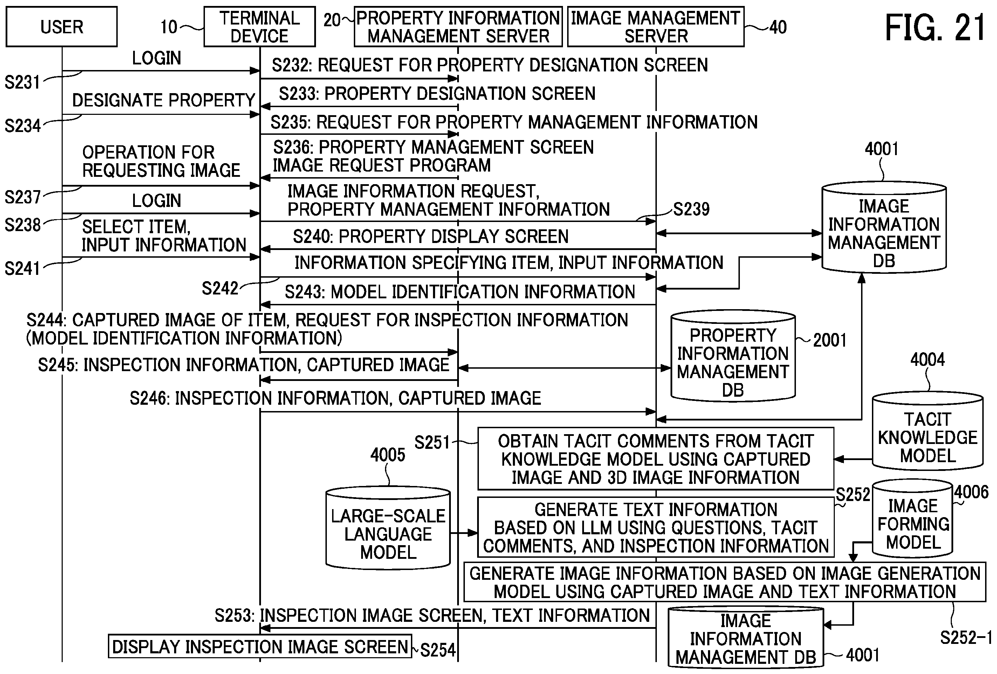

FIG. 21 is a sequence diagram illustrating a process of generating text information and image information. The following description with reference to FIG. 21 focuses on the differences from FIG. 17. Steps S231 to S254 of FIG. 21 may be similar to steps S131 to S154 of FIG. 17. In FIG. 21, step S252-1 is added.

In step S252-1, the image generation unit 48 inputs the captured image and the text information generated by the large-scale language model 4005 to the image generation model 4006 to generate image information. Alternatively, the image generation unit 48 may obtain the image information generated by the image generation model 4006 using the text information generated by the large-scale language model 4005 without using the captured image.

The storing-reading unit 49 stores (or overwrites) the text information generated by the large-scale language model 4005 and the image information generated by the image generation model 4006 in the image information management DB 4001 in association with the captured image and the inspection information stored in the image information management DB 4001 in step S246.

In step S253, the processing unit 47 associates the three-dimensional image information of the item corresponding to the model identification information, the generated image information, and the text information with one another, and requests the screen generation unit 42 to display these items of information.

The screen generation unit 42 generates a screen corresponding to the second display area 215 that displays the three-dimensional image information of the item, the generated image information, and the text information corresponding to the three-dimensional image information and the captured image of the item. The transmission-reception unit 41 of the image management server 40 transmits the screen information of the screen corresponding to the second display area 215 to the terminal device 10. The transmission-reception unit 11 of the terminal device 10 receives the screen information of the screen corresponding to the second display area 215 from the image management server 40.

### Screen in Inference Phase

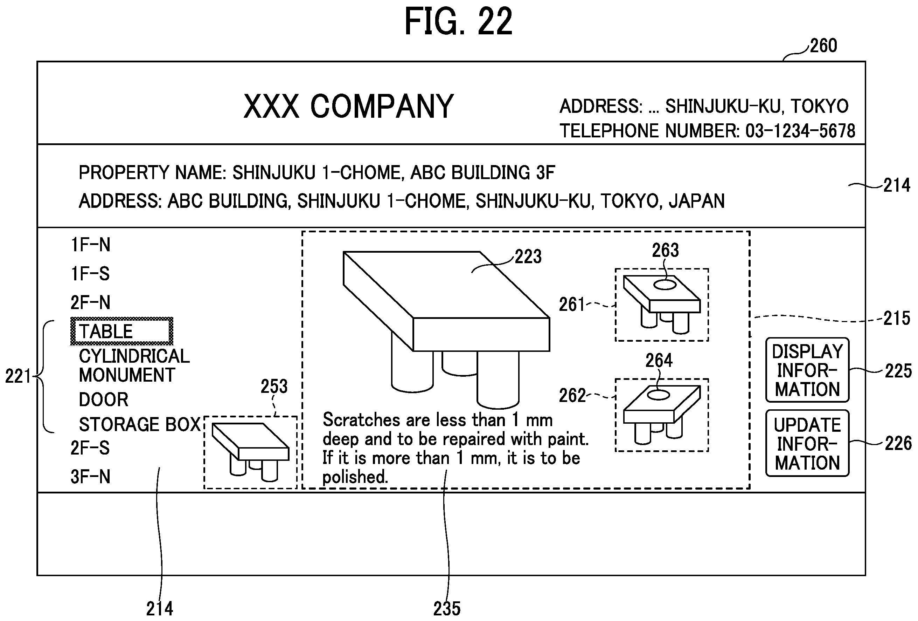

FIG. 22 is a diagram illustrating generated images displayed on an inspection image screen 260. The following description with reference to FIG. 22 focuses on the differences from FIG. 19.

On the inspection image screen 260 in FIG. 22, generated images 261 and 262 are displayed. The generated images 261 and 262 are not the captured images 254 and 258 themselves described above with reference to FIG. 19. The generated images 261 and 262 are generated by the image generation model 4006 based on the captured images 254 and 258 and the text information 235. Accordingly, the generated images 261 and 262 have markers 263 and 264 indicating the position of the scratch, respectively. Instead of one of the generated images 261 and 262, one of the captured image 254 and 258 may be displayed. Alternatively, the display of the generated image and the captured image may be switched by a user operation.

### Effect of Generating Text Information Using Inspection Information

An effect of generating text information using inspection information is described below.
1. Comparative Example 1 (Typical Large-Scale Language Model is Used)
   Question sentence from the user: "How can I repair cracks?"
   Tacit Knowledge Comments: Tape or filler can be used.
2. Comparative Example 2 (Three-Dimensional Image Information is Learned) Learning Phase
   Input image: three-dimensional image information
   Comment: Please use tape for wide cracks and filler for narrow cracks.
   Inference Phase
   Input image: three-dimensional image information
   Question sentence: "How can I repair cracks?"
   Tacit knowledge comment: There are wide and narrow cracks. It is recommended to use tape for the former and filler for the latter.
3. Present Embodiment (Three-Dimensional Image Information and Captured Image)
   Learning Phase
   Input image: three-dimensional image information and a captured image
   Inspection Information: There is a split in the tape at the corner.
   Inference Phase
   Input image: three-dimensional image information and a captured image
   Question sentence: "How can I repair cracks?"
   Tacit knowledge comment: There are wide and narrow cracks. It is recommended to use tape for the former and filler for the latter. Be careful when applying tape to corners, as the tape may split. In other words, "Be careful when applying tape to corners, as the tape may split" is an effect of having learned the inspection information.
4. Present Embodiment (Three-Dimensional Image Information, Captured Image, and Input Information)
   Learning Phase
   Input image: three-dimensional image information and a captured image
   Input information: Please use tape for wide cracks and filler for narrow cracks.
   Inspection Information: There is a split in the tape at the corner.
   Inference Phase
   Input image: three-dimensional image information and a captured image
   Question sentence: "How can I repair cracks?"
   Tacit knowledge comment: There are wide and narrow cracks. It is recommended to use tape for the former and filler for the latter. Be careful when applying tape to corners, as the tape may split. In other words, "Be careful when applying tape to corners, as the tape may split" is an effect of having learned the inspection information.
   Multimodal
   Several examples of combinations of input information and tacit knowledge comments are described below. Although the above-described model is assumed to be a large-scale language model, a multimodal model may be used. A multimodal model receives data in multiple data formats, such image, text, and gesture, and outputs data in a certain data format.

In a case where character strings are input as input information to generate tacit knowledge comments in the form other than text information,
character strings are input to generate an image,
character strings are input to generate a moving image,
character strings are input to generate audio, or
character strings are input to generate a 3D model.

In a case where a character string and non-text data are input as input information to generate tacit knowledge comments in the form of text,
images and character strings are input to generate text information,
a 3D model and a character string are input to generate text information, or
audio and a character string are input to generate text information.

In a case where a character string and non-text data are input as input information to generate tacit knowledge comments in the form other than text,
images and character strings are input to generate an image,
moving images and character strings are input to generate a moving image,
3D models and character strings are input to generate a 3D model, or
audio and character strings are input to generate audio.

The image management server 40 described above updates the tacit knowledge model with the inspection information, the captured image, and the three-dimensional image information as the process based on the inspection information, the captured image, and the three-dimensional image information. This allows the terminal device 10 to display the tacit knowledge comment corresponding to the inspection information, the captured image, and the three-dimensional image information. Even when the inspection information and the captured image are not obtained at the time of generating the text information, the tacit knowledge model can output a tacit knowledge comment generated based on the obtained three-dimensional image information and the captured image, considering the inspection information.

Any one of the above-described operations may be performed in various other ways, for example, in an order different from the one described above.

The image management server 40 described above is merely one example, and various system configurations may be employed depending on the intended application or purpose.

For example, a tacit knowledge model for an industry such as civil engineering or construction answers a question in the above-described embodiments. However, a tacit knowledge model may be used in any industry in which tacit knowledge is effective, such as medical care, dental care, or investment decisions.

Although the large-scale language model 4005 generates text information based on tacit knowledge comments in the description above, the tacit knowledge comments may be used as text information without using the large-scale language model 4005.

The tacit knowledge model 4004 may be trained to learn tacit knowledge comments using three-dimensional image information and inspection information as inputs and using input information as an output. In other words, information in different forms, such as an image and text, may be input to the tacit knowledge model 4004.

In the description above, the information processing system 100 is a client-server system. However, the functions of the image management server 40 may be installed in the terminal device 10 as applications. In other words, the functions described above may be made available to the user in a stand-alone manner.

In the functional configuration illustrated in, for example, FIG. 3, the configuration is divided into blocks of functions, to facilitate understanding of the processing by the image management server 40. No limitation is intended by how the processing units are divided by the unit of process or by the name. The processing performed by the image management server 40 may be divided into a greater number of processing units depending on the nature of the processing. Alternatively, a single processing unit may be divided into multiple processing units.

Each of the functions of the above-described embodiments of the present disclosure may be implemented by one or more pieces of processing circuitry. The "processing circuit or circuitry" in the present specification includes a programmed processor to execute each function by software, such as a processor implemented by an electronic circuit, and devices, such as an application-specific integrated circuit (ASIC), a digital signal processor (DSP), a field-programmable gate array (FPGA), and conventional circuit modules arranged to perform the recited functions.

The group of apparatuses or devices described in the above-described embodiments is one of multiple computing environments to implement the above-described embodiments in the present disclosure. Alternatively, the image management server 40 may include multiple computing devices, such as in the form of a server cluster. The multiple computing devices communicate with one another through any type of communication link including, for example, a network and a shared memory, and perform the processes disclosed in the present disclosure.

Further, the image management server 40 may combine the processing steps in various ways. The elements of the image management server 40 may be integrated into one apparatus or allocated to multiple apparatuses. The processing performed by the image management server 40 may alternatively be carried out by the terminal device 10.

The present disclosure includes the following aspects.

### Aspect 1

An information processing system includes a first server that stores information related to an item, a second server that stores three-dimensional image information of the item, and a terminal device that communicates with the first server and the second server. The information related to the item includes a two-dimensional image of the item.

The terminal device includes a display control unit to display, on a display, a display screen including the item-related information received from the first server and the three-dimensional image information received from the second server.

The second server includes a processing unit to associate the three-dimensional image information with the information related to the item or generated information being generated based on the information related to the item, based on the information related to the item transmitted from the first server and the three-dimensional image information.

The display control unit of the terminal device displays, on the display screen, the three-dimensional image information received from the second server, and either at least a portion of the information related to the item or the generated information associated with the three-dimensional image information.

### Aspect 2

In the information processing system of Aspect 1, the display screen displayed by the display control unit of the terminal device includes a first display area and a second display area. The first display area displays a first portion of the at least a portion of the information related to the item received from the first server.

The second display area displays the three-dimensional image information received from the second server, and either a second portion of the at least a portion of the information related to the item or the generated information associated with the three-dimensional image information.

### Aspect 3

In the information processing system of Aspect 1 or 2, the second server stores the information related to the item received from the first server in a storage unit in association with the three-dimensional image information of the item.

### Aspect 4

In the information processing system of Aspect 1, the processing unit requests the first server to transmit the information related to the item, and receives the information related to the item from the first server as a response to the request.

### Aspect 5

In the information processing system of any one of Aspects 1 to 4, the information related to the item includes inspection information of the item and a two-dimensional image of the item.

### Aspect 6

In the information processing system according to aspect 5, the second server includes a model trained to learn a correspondence between the three-dimensional image information of the item and the two-dimensional image of the item, and the inspection information of the item, and the processing unit obtains text information generated by the model, as the generated information based on the three-dimensional image information and the two-dimensional image of the item for which the terminal device has received selection.

### Aspect 7

In the information processing system of Aspect 5, the second server includes a model trained to learn a correspondence between the three-dimensional image information of the item and the two-dimensional image of the item, and the inspection information of the item and the input information received from the terminal device, and the processing unit obtains text information generated by the model, as the generated information based on the three-dimensional image information and the two-dimensional image of the item for which the terminal device has received selection.

### Aspect 8

In the information processing system according to Aspect 6, the second server includes an updating unit to update the model by causing the model to learn a correspondence between the three-dimensional image information and the two-dimensional image of the item, and the inspection information of the item.

### Aspect 9

In the information processing system of Aspect 7, the second server includes an updating unit to update the model by causing the model to learn a correspondence between the three-dimensional image information and the two-dimensional image of the item, and the inspection information of the item and the input information received from the terminal device.

### Aspect 10

In the information processing system of any one of Aspects 1 to 9, the three-dimensional image information of the item displayed by the display control unit is obtained by projecting a three-dimensional model of the item onto a two-dimensional plane, and the three-dimensional image information is displayable from multiple viewpoints.

### Aspect 11

In the information processing system of any one of Aspects 1 to 10, the terminal device further includes an input receiving unit to receive selection of another item different from the item whose three-dimensional image information is currently displayed in a state where the three-dimensional image information of the item and either the at least a portion of the information related to the item or the generated information associated with the three-dimensional image information are displayed on the display screen by the display control unit.

The processing unit associates the three-dimensional image information of the another item with the information related to the another item or generated information being generated based on the information related to the another item, based on information related to the another item transmitted from the first server and the three-dimensional image information of the another item.

The display control unit displays, on the display screen, the three-dimensional image information of another item received from the second server, and either at least a portion of the information related to the another item or the generated information associated with the three-dimensional image information of another item.

Another aspect provides a first server that stores information relating to an item and communicates with a second server that stores image information of the item and a terminal device that displays a display screen including the information related to the item received from the first server and the image information of the item received from the second server. The first server includes a transmission unit to transmit information related to the item to the terminal device to allow the terminal device to display the information related to the item on the display screen. Further, the transmission unit transmits the information related to the item to the terminal device in response to a request from the terminal device having received a request from the second server, or transmits the information related to the item to the second server in response to the request from the second server, so that the image information of the item and either the at least a portion of the information related to the item or information generated based on the information related to the item, associated with the image information of the item are displayed on the display screen.

Another aspect provides a second server in a system including a first server that stores information related to an item and a terminal device that communicates with the first server and the second server. The second server stores image information of the item, and the terminal device displays a display screen including the information related to the item received from the first server and the image information of the item received from the second server. The second server includes a processing unit to associate the image information with the information related to the item received from the first server or generated information being generated based on the information related to the item, and a transmission unit to transmit screen information to allow the terminal device to display, on the display screen, the image information of the item and either at least a portion of the information related to the item or information generated based on the information related to the item, associated with the image information.

The present invention can be implemented in any convenient form, for example using dedicated hardware, or a mixture of dedicated hardware and software. The present invention may be implemented as computer software implemented by one or more networked processing apparatuses. The processing apparatuses include any suitably programmed apparatuses such as a general purpose computer, a personal digital assistant, a Wireless Application Protocol (WAP) or third-generation (3G)-compliant mobile telephone, and so on. Since the present invention can be implemented as software, each and every aspect of the present invention thus encompasses computer software implementable on a programmable device. The computer software can be provided to the programmable device using any conventional carrier medium (carrier means). The carrier medium includes a transient carrier medium such as an electrical, optical, microwave, acoustic or radio frequency signal carrying the computer code. An example of such a transient medium is a Transmission Control Protocol/Internet Protocol (TCP/IP) signal carrying computer code over an IP network, such as the Internet. The carrier medium may also include a storage medium for storing processor readable code such as a floppy disk, a hard disk, a compact disc read-only memory (CD-ROM), a magnetic tape device, or a solid state memory device.

## Claims

1. An information processing system (100) comprising:
a first server (20) configured to store information related to an item;
a second server (40) configured to store image information of the item; and
a terminal device (10), wherein
the second server (40) includes a processing unit (47) configured to associate the image information with the information related to the item received from the first server (20) or generated information being generated based on the information related to the item;
the terminal device (10) includes a display control unit (13) configured to display a display screen including the image information and either at least a portion of the information related to the item or the generated information associated with the image information, which are received from the second server (40).

2. The information processing system (100) according to claim 1, wherein
the display screen includes:
a first display area (214) in which a first portion of the at least a portion of the information related to the item is displayed; and
a second display area (215) in which the image information received from the second server (40) and either a second portion of the at least a portion of the information related to the item or the generated information associated with the image information are displayed.

3. The information processing system (100) according to claim 1 or 2, wherein the second server (40) further includes a storing control unit (49) configured to store the information related to the item received from the first server (20) in a storage unit (4000) in association with the image information of the item.

4. The information processing system (100) according to claim 1,
wherein the processing unit (47) is configured to:
request the first server (20) to transmit the information related to the item; and
receive the information related to the item from the first server (20) in response to the request.

5. The information processing system (100) according to claim 1, wherein
the second server (40) includes a storage unit (4000) that stores a model (4004) trained to learn a correspondence between the image information of the item and the information related to the item,
the model (4004) is configured to generate text information based on the image information of the item for which the terminal device (10) has received selection, and
the processing unit (47) is configured to obtain the text information generated by the model (4004) as the generated information.

6. The information processing system (100) according to claim 1, wherein
the second server (40) includes a storage unit (4000) that stores a model (4005) trained to learn a correspondence between the image information of the item, and the information related to the item and input information received from the terminal device (10),
the model (4005) is configured to generate text information based on the image information of the item for which the terminal device (10) has received selection, and
the processing unit (47) is configured to obtain the text information generated by the model (4005) as the generated information.

7. The information processing system (100) according to claim 5,
wherein the second server (40) includes an updating unit (46) configured to update the model (4004) by causing the model (4004) to learn a correspondence between the image information of the item and the information related to the item.

8. The information processing system (100) according to claim 6,
wherein the second server (40) includes an updating unit (46) configured to update the model (4005) by causing the model (4005) to learn a correspondence between the image information of the item, and the information related to the item and the input information received from the terminal device (10).

9. The information processing system (100) according to claim 1, wherein the image information of the item is obtained by projecting a three-dimensional model of the item onto a two-dimensional plane, and is displayable from multiple viewpoints.

10. The information processing system (100) according to claim 1,
wherein the information related to the item includes information that indicates a state of the item and is input by a user who inspects the item.

11. The information processing system (100) according to claim 1, wherein
the terminal device (10) includes an input receiving unit (12) configured to receive selection of another item different from the item whose image information is currently displayed together with either the at least a portion of the information related to the item or the generated information associated with the image information on the display screen by the display control unit (13),
the processing unit (47) is configured to associate the image information of the another item with the information related to the another item received from the first server (20) or generated information being generated based on the information related to the another item, and
the display control unit (13) is configured to display, on the display screen, the image information of the another item and either at least a portion of the information related to the another item or the generated information associated with the image information of the another item, which are received from the second server (40).

12. A method for processing information performed by a server storing image information of an item, the method comprising:
associating (S17) the image information with information related to the item received from another server or generated information being generated based on the information related to the item; and
transmitting (S17) screen information to a terminal device to allow the terminal device to display, on a display screen, the image information of the item and either at least a portion of the information related to the item or the generated information associated with the image information.

13. A carrier medium carrying computer readable codes which, when executed by a server, cause the server to carry out the method according to claim 12.
